# EUROPEAN PATENT SPECIFICATION

(11) **EP 4 369 812 B1**
(45) Date of publication and mention of the grant of the patent: **28.10.2026**
(21) Application number: 21948839.2
(22) Date of filing: 08.07.2021
(51) Int. Cl.: H04W 72/02, H04W 72/40, H04W 72/0446, H04W 92/18

(54) **RESOURCE DETERMINATION METHOD, APPARATUS AND DEVICE, AND MEDIUM, CHIP, PRODUCT AND PROGRAM**
RESSOURCENBESTIMMUNGSVERFAHREN, -VORRICHTUNG UND -VORRICHTUNG SOWIE MEDIUM, CHIP, PRODUKT UND PROGRAMM
PROCÉDÉ, APPAREIL ET DISPOSITIF DE DÉTERMINATION DE RESSOURCE, SUPPORT, PUCE, PRODUIT ET PROGRAMME

(43) Date of publication of application: 15.05.2024
(73) Proprietor: GUANGDONG OPPO MOBILE TELECOMMUNICATIONS CORP., LTD., Dongguan, Guangdong 523860 (CN)
(72) Inventor: ZHANG, Shichang, Dongguan, Guangdong 523860 (CN); LIN, Huei-Ming, Taiwan 111 (TW); DING, Yi, Dongguan, Guangdong 523860 (CN); ZHAO, Zhenshan, Dongguan, Guangdong 523860 (CN); MA, Teng, Dongguan, Guangdong 523860 (CN)
(74) Representative: Santarelli
(86) International application number: PCT/CN2021/105329
(87) International publication number: WO 2023/279343

(56) References cited:
- CN-A- 109 565 793
- CN-A- 109 792 590
- CN-A- 110 856 270
- CN-A- 111 885 620
- CN-A- 112 512 124
- US-A1- 2020 229 171
- NTT DOCOMO ET AL: "Discussion on sidelink resource allocation for power saving", vol. RAN WG1, no. e-Meeting; 20210510 - 20210527, 12 May 2021 (2021-05-12), XP052011664, Retrieved from the Internet <URL:https://ftp.3gpp.org/tsg_ran/WG1_RL1/TSGR1_105-e/Docs/R1-2105718.zip> [retrieved on 20210512]
- NEC: "Discussion on resource allocation for power saving", vol. RAN WG1, no. e-Meeting; 20210412 - 20210420, 7 April 2021 (2021-04-07), XP052178236, Retrieved from the Internet <URL:https://ftp.3gpp.org/tsg_ran/WG1_RL1/TSGR1_104b-e/Docs/R1-2103517.zip> [retrieved on 20210407]
- LG ELECTRONICS: "Discussion on resource allocation for power saving", vol. RAN WG1, no. e-Meeting; 20210412 - 20210420, 7 April 2021 (2021-04-07), XP052178121, Retrieved from the Internet <URL:https://ftp.3gpp.org/tsg_ran/WG1_RL1/TSGR1_104b-e/Docs/R1-2103378.zip> [retrieved on 20210407]
- INTEL CORPORATION: "FL summary#2 of critical issues for 7.2.4.2.2 – V2X Mode 2", 3GPP DRAFT; R1-2001170, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20200224 - 20200306, 22 February 2020 (2020-02-22), Mobile Competence Centre ; 650, route des Lucioles ; F-06921 Sophia-Antipolis Cedex ; France , XP051853716
- "3rd Generation Partnership Project; Technical Specification Group Radio Access Network; NR; Physical layer procedures for data (Release 16)", 3GPP STANDARD; TECHNICAL SPECIFICATION; 3GPP TS 38.214, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V16.6.0, 30 June 2021 (2021-06-30), Mobile Competence Centre ; 650, route des Lucioles ; F-06921 Sophia-Antipolis Cedex ; France , pages 1 - 172, XP052029956

## Description

### TECHNICAL FIELD

Embodiments of the present disclosure relate to, but are not limited to, Sidelink (SL) communication, in particular to a method for determining a resource, a device, a medium, and a chip.

### BACKGROUND

Vehicle to Everything (V2X) communication refers to the communication between a vehicle and anything outside, which includes Vehicle to Vehicle (V2V), Vehicle to Pedestrian (V2P), Vehicle to Infrastructure (V2I), and Vehicle to Network (V2N). The Device to Device (D2D) communication technology refers to a communication manner in which two peer-to-peer user nodes communicate directly.

At present, in the V2X system or the D2D system, how to improve the communication reliability of the terminal is always concerned in this field.
NTT DOCOMO ET AL, "Discussion on sidelink resource allocation for power saving", 3GPP DRAFT; R1-2105718: "Discussion on sidelink resource allocation for power saving" provides schemes on resource allocation enhancement for power saving,
NEC, "Discussion on resource allocation for power saving", 3GPP DRAFT; R1-2103517: "Discussion on sidelink resource allocation for power saving" provides radio solutions to reduce power consumption of UEs in terms of resource allocation.
LG ELECTRONICS, "Discussion on resource allocation for power saving", 3GPP DRAFT; R1-2103378: "Discussion on sidelink resource allocation for power saving" provides the resource allocation schemes for UE power saving, including the possible impact of sidelink DRX on the resource allocation.

### SUMMARY

The embodiments of the present disclosure provide a method and an apparatus for determining a resource, a device, a medium, a chip, a product and a program.

Technical solutions of embodiments of the present application are set out in the appended set of claims.

In the embodiments of the present disclosure, the terminal first determines the time range for contiguous partial sensing, and then performs resource exclusion on a resource in a third number of candidate slots where a reserved resource corresponding to sensed sidelink information within the time range is located based on the sensing result within the time range, so that the time-frequency resource reserved by the SL information is obtained and excluded by decoding the detected SL information, thus avoiding resource collision and improving the reliability of communication.

### BRIEF DESCRIPTION OF THE DRAWINGS

The drawings illustrated the present disclosure serve to provide a further understanding to and constitute a part of the present disclosure, and the illustrative embodiments of the present disclosure and the description thereof are used to explain the present disclosure and are not unduly limiting. In the drawings:
FIG. 1a is a schematic diagram of a unicast transmission manner between terminals not being part of the invention.
FIG. 1b is a schematic diagram of a multicast transmission manner among terminals not being part of the invention.
FIG. 1c is a schematic diagram of a broadcast transmission manner among terminals not being part of the invention.
FIG. 1d is a schematic diagram illustrating that terminals for SL communication are all within the coverage range of the network not being part of the invention.
FIG. 1e is a schematic diagram illustrating that a part of terminals for SL communication is within the coverage range of the network not being part of the invention.
FIG. 1f is a schematic diagram illustrating that terminals for SL communication are all outside the coverage range of the network not being part of the invention.
FIG. 2 is a schematic diagram of excluding a resource by a manner of periodic partial sensing provided by the embodiments of the present disclosure.
FIG. 3 is a flow diagram of a method for determining a resource provided by the embodiments of the present disclosure.
FIG. 4 is a schematic diagram of a composition structure of an apparatus for determining a resource not being part of the invention.
FIG. 5 is a hardware entity diagram of a device for determining a resource provided by the embodiments of the present disclosure.
FIG. 6 is a schematic structural diagram of a chip provided by the embodiments of the present disclosure.

### DETAILED DESCRIPTION

The technical solutions of the present disclosure will be described in detail by way of embodiments and in combination with the drawings. The following specific embodiments may be combined with one another and may not be repeated in some embodiments for identical or similar concepts or processes. It should be noted that in the embodiments of the present disclosure, "first", "second" and the like are used to distinguish similar objects and need not be used to describe a specific order or priority. In addition, the technical solutions described in the embodiments of the present disclosure may be arbitrarily combined without conflict. References to plural or multiple times in the embodiments of the present disclosure are to be understood as two or more, two or more times without particular description.

In the embodiments of the present disclosure, slots within a range from slot A to slot B include slot A, slot B and slots between slot A and slot B.

In the present disclosure, the terminal, another terminal or other terminal may be called a User Equipment (UE), a Mobile Station (MS), a Mobile Terminal (MT) or the like. The terminal, another terminal or other terminal may include one or a combination of at least two of the following: a mobile phone, a tablet computer (Pad), a computer with wireless transceiver function, a palmtop computer, a desktop computer, a personal digital assistant, a portable media player, a smart speaker, a navigation device, a smart watch, a smart glasses, a smart necklace and other wearable devices, a pedometer, a digital TV, a Virtual Reality (VR) terminal device, an Augmented Reality (AR) terminal device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, and a vehicle in the V2X system, an on-board device, an on-board module, a wireless modem, a handheld device, a Customer Premise Equipment (CPE) and a smart home appliance.

The network device in the embodiments of the present disclosure may include an access point of Wireless-Fidelity (Wi-Fi), an evolved base station or a base station in the next generation communication, such as a gNB or small station, a micro station or a transmission reception point (TRP) in the 5G, or a relay station, an access point, etc.

The method for determining a resource in the embodiments of the present disclosure may be applied to a Long Term Evolution (LTE) or a LTE advanced (LTE-A) system, and may also be applied to a 5G network, a 6G network or other future networks, which are not specifically limited in the embodiments of the present disclosure. In different networks, the terminals in the communication system may correspond to different names, and it will be understood by those skilled in the art that the names do not define the device itself. For example, the method for determining a resource may be applied to a V2X system or a D2D system. The V2X system may include an LTE V2X system or a New Radio (NR) V2X system. In the V2X system, the terminals may communicate in two manners. Firstly, the terminals communicate with each other through a Uu interface. That is, the communication between terminals needs to be forwarded by nodes such as base stations. Secondly, the terminals may perform SL communication. That is, the terminals may perform direct communication without forwarding by the base station. At this time, the link directly connected between terminals is called a SL.

In the SL communication, the SL communication may be divided into a SL communication within a coverage range of the network, a SL communication being partially within a coverage range of the network and a SL communication outside a coverage range of the network according to the network coverage situation of the terminals that perform communication.

In the V2X system, automatic driving needs to be supported, so higher requirements are put forward for data interaction between vehicles, such as higher throughput, lower delay, higher reliability, larger coverage range and more flexible resource allocation.

In the V2X system, the broadcast transmission manner may be supported, and/or unicast and multicast transmission manners may be introduced.

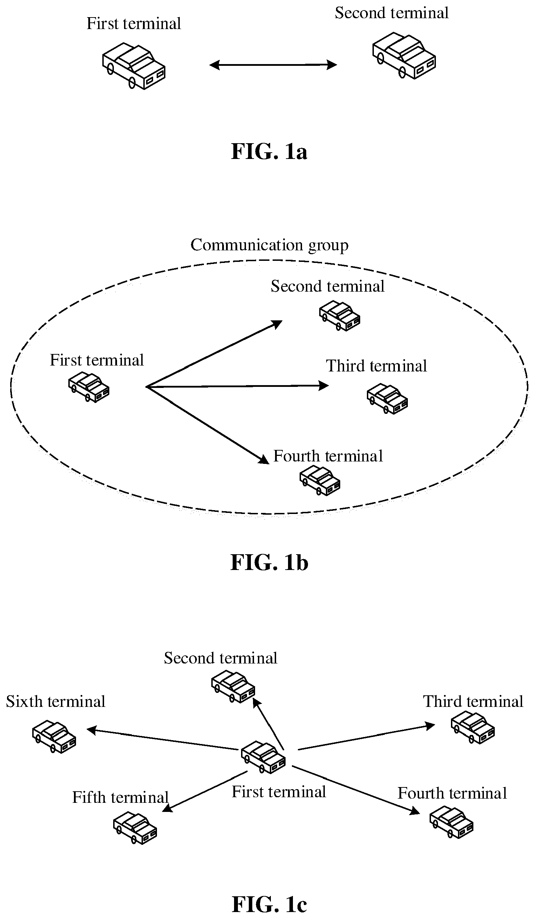

FIG. 1a is a schematic diagram of a unicast transmission manner between terminals provided by the embodiments of the present disclosure. As illustrated in FIG. 1a, for the unicast transmission, the receiving terminal is a terminal, for example, the first terminal and the second terminal may communicate with each other in one direction.

FIG. 1b is a schematic diagram of a multicast transmission manner among terminals provided by the embodiments of the present disclosure. As illustrated in FIG. 1b, for the multicast transmission, the receiving terminal is all terminals in a communication group or all terminals within a certain transmission distance. For example, the first terminal may transmit SL information to the second terminal, the third terminal and the fourth terminal in a communication group.

FIG. 1c is a schematic diagram of a broadcast transmission manner among terminals provided by the embodiments of the present disclosure. As illustrated in FIG. 1c, for the broadcast transmission manner, the receiving terminal is any terminal around the transmitting terminal, for example, the first terminal is the transmitting terminal, and other terminals around the first terminal, such as any one of the second terminal to the sixth terminal is all receiving terminal.

The terminal in the embodiments of the present disclosure may include any one of the first terminal to the sixth terminal mentioned above.

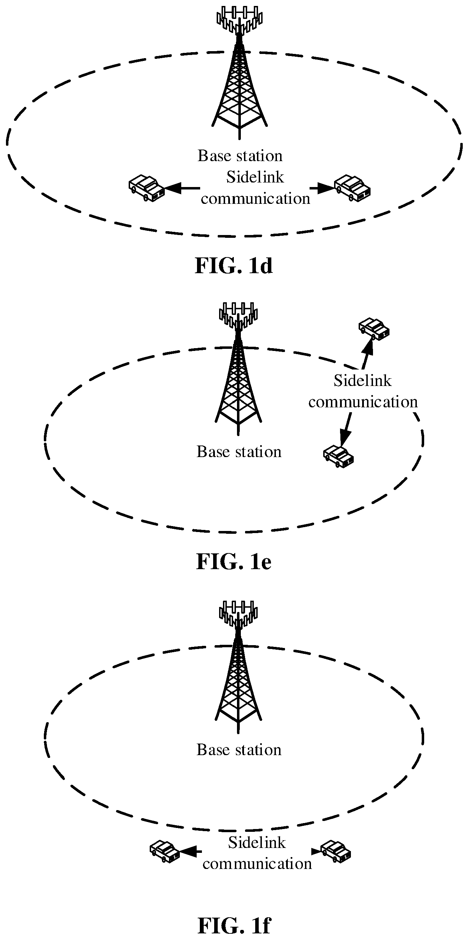

FIG. 1d is a schematic diagram illustrating that terminals for SL communication are all within the coverage range of the network provided by the embodiments of the present disclosure. As illustrated in FIG. 1d, for the SL communication within the coverage range of the network, terminals within the coverage range of the same base station may perform SL communication based on the same SL configuration by receiving configuration information of the base station.

In the embodiments of the present disclosure, "within the coverage range of the network" may be "within the coverage range corresponding to one or more network devices".

FIG. 1e is a schematic diagram illustrating that a part of terminals for SL communication is within the coverage range of the network provided by the embodiments of the present disclosure. As illustrating in FIG. 1e, in a case of the SL communication partially being within a coverage range of the network, the terminal within the coverage range of the network can receive the configuration information of the base station and perform SL communication according to the configuration of the base station. The terminal outside the coverage range of the network cannot receive the configuration information of the base station. In this case, the terminal outside the coverage range of the network determines the SL configuration information based on the pre-configuration information and the information carried in the Physical Sidelink Broadcast Channel (PSBCH) transmitted by the terminal within the coverage range of the network, thereby performing SL communication.

FIG. 1f is a schematic diagram illustrating that terminals for SL communication are all outside the coverage range of the network provided by the embodiments of the present disclosure. As illustrated in FIG. I1f, for the SL communication outside the coverage range of the network, all terminals may determine SL configuration according to pre-configuration information to perform the SL communication.

The D2D-based SL transmission technology is different from the manner in which communication data is received or transmitted through a base station in the traditional cellular system. The D2D communication has higher spectrum efficiency and lower transmission delay. The V2X system adopts a terminal-to-terminal direct communication manner, and there are two resource selection modes: the first resource selection mode and the second resource selection mode.

In the first resource selection mode, the transmission resource of the terminal may be allocated by the base station, and the terminal may transmit SL information on the SL according to the resource allocated by the base station. The base station may allocate a resource for single transmission or a resource for semi-static transmission for the terminal. In the terminal within the coverage range of the network as illustrated in FIG. 1d and FIG. 1e, the terminal is within the coverage range of the network, the network may allocate a transmission resource for SL transmission for the terminal.

In the second resource selection mode, the terminal may select a resource in the resource pool for data transmission. In the terminal outside the coverage range of the network as illustrated in FIG. 1e and FIG. 1f, the terminal is outside the coverage range of the cell, and the terminal may independently select transmission resource in the pre-configured resource pool for SL transmission. Alternatively, in the terminal within the coverage range of the network as illustrated in FIG. 1d and FIG. 1e, the terminal may independently select transmission resource in the resource pool configured by the network for SL transmission. In the second resource selection mode, the physical layer of the terminal may exclude a resource unsuitable for SL transmission from the resource selection window according to the channel sensing result, and may determine a candidate resource set based on the resource unsuitable for SL transmission, report the candidate resource set to the Media Access Control (MAC) layer of the terminal, and then the MAC layer selects a resource from the reported candidate resource set to transmit the SL information.

The terminal may select the resource according to the manner of partial sensing, for example, the terminal may select the resource according to periodic partial sensing and/or contiguous partial sensing.

For periodic partial sensing, the terminal may determine the corresponding sensing slots according to Y candidate slots determined in the resource selection window and the resource reservation period set M or a subset of M in the resource pool configuration. When the resource selection is performed, the resource exclusion may be performed on the resources within the at least Y candidate slots at least according to the sensing result in the above determined sensing slots and/or the slots in which sensing is not performed, so as to exclude a resource unsuitable for SL transmission, and select a resource from the resources that are not excluded to transmit data.

The Y candidate slots in any embodiment of the present disclosure may be a first number of candidate slots or a third number of candidate slots.

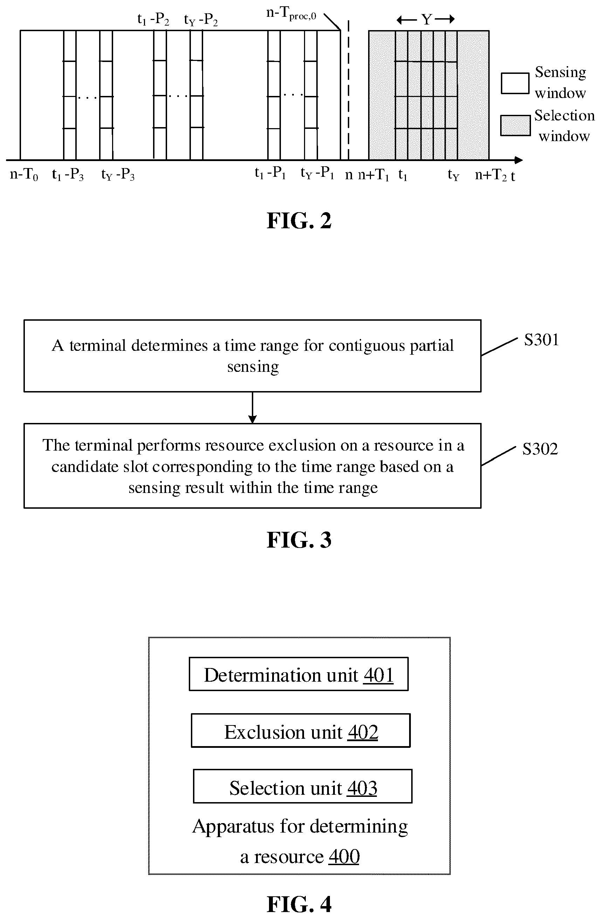

FIG. 2 is a schematic diagram of excluding a resource by the manner of periodic partial sensing provided by the embodiments of the present disclosure. As illustrated in FIG. 2, the time domain of the sensing window may be between n-T₀ and n-T_{proc,0}, and the selection window may be resources in [n+T₁, n+T₂].

The slot n is the slot that triggers the resource selection or resource reselection indication.

The value of T₀ is 100 or 1100 milliseconds. In a case that the subcarrier spacings are 15, 30, 60 and 120kHz respectively, the values of T_{proc,0} may be 1, 1, 2 and 4 slots respectively.

0<=T₁<=T_{proc,1}. The value of T_{proc,1} is related to the subcarrier spacing of the first terminal. In a case that the subcarrier spacings are 15, 30, 60 and 120kHz respectively, the values of T_{proc,1} may be 3, 5, 9 and 17 slots respectively. T₂ is greater than or equal to T₂ₘᵢₙ and less than or equal to the remaining delay budget of the service. The set of values for T₂ₘᵢₙ may be a slot selected from the set {1×2^{µ}, 5×2^{µ}, 10×2^{µ}, 20×2^{µ}}. In a case that the subcarrier spacings are 15, 30, 60, 120kHz, respectively, the values of µ may be 0, 1, 2, 3 respectively. The first terminal may determine T₂ₘᵢₙ from the set of values {1×2^{µ}, 5×2^{µ}, 10×2^{µ}, 20×2^{µ}} according to the priority of the SL data transmitted by itself.

The terminal may determine a total of Y candidate slots t₁ to ty in the resource selection window, and the resource reservation period set M in the resource pool configuration used includes periods P1, P2 and P3. The terminal may determine the sensing slots in the resource sensing window as t₁-P1 to t_{Y}-P1, t₁-P2 to ty-P2 and t₁-P3 to ty-P3 according to each resource reservation period in the set M and Y candidate slots. That is, the slots corresponding to the latest period belonging to the resource sensing window are determined according to the Y candidate slots and each resource reservation period. In a case that the terminal performs resource selection or resource reselection in the slot n, the terminal may exclude a resource in the Y candidate slots at least according to the sensing result in the slots determined in the resource sensing window and/or the slots in which the sensing is not performed, and select a resource from the remaining resources in the Y slots to transmit data.

For the contiguous partial sensing, the terminal may perform the contiguous partial sensing for aperiodic resource reservation and/or resource reservation with a smaller period. For example, as illustrated in FIG. 2, if the terminal triggers the contiguous partial sensing in slot n, the terminal may continuously sense the slots between n+TA1 and n+TA2. The resource exclusion is performed on at least Y candidate slots according to the sensing result within [n+TA1, n+TA2] and/or slots in which the sensing is not performed, so as to obtain a candidate resource set, and a transmission resource is selected from the candidate resource set.

In order to facilitate understanding of the technical solutions of the embodiments of the present disclosure, the technical solutions of the present disclosure will be described in detail below by way of specific embodiments. As an alternative method, the above description and the technical solutions of the embodiments of the present disclosure may be arbitrarily combined, and all of them belong to the protection scope of the embodiments of the present disclosure. Embodiments of the present disclosure include at least some of the following.

FIG. 3 is a flow diagram of a method for determining a resource provided by the embodiments of the present disclosure. As illustrated in FIG. 3, the method includes the following operations.

In operation S301, a terminal determines a time range for contiguous partial sensing.

The time range may be understood in the same way as the sensing window or time window.

The terminal operates in a mode of contiguous partial sensing for resource selection, or the terminal operates in a mode of periodic partial sensing and contiguous partial sensing for resource selection, and the terminal may determine the time range for contiguous partial sensing.

The terminal may determine the SL channel for the contiguous partial sensing. The SL channel may include a Physical Sidelink Control Channel (PSCCH) and/or a Physical Sidelink Shared Channel (PSSCH), to sense the SL information. The SL information may include Sidelink Control Information (SCI) and/or SL data information. The SCI and/or the SL data information may be information transmitted to the terminal by other terminals or the network device. In this way, the terminal may determine a time range of the SL channel or SL information for the contiguous partial sensing.

The terminal may determine the time range for contiguous partial sensing in a case that a resource selection or a resource reselection indication is triggered. The time range includes a range from the third time to the fourth time. The third time is a sum of the target time and the first time. The fourth time is a sum of the target time and the second time. The target time is a target slot, the serial number of the target slot is n, the first time is TA1, and the second time is TA2. The range from the third time to the fourth time is [n+TA1, n+TA2]. The third time is the third slot, the fourth time is the fourth slot, the serial number of the third slot is n+TA1, and the serial number of the fourth slot is n+TA2. The value of TA1 is the number of slots, and the value of TA2 is the number of slots.

The terminal determines the time range based on the target time (e.g. target slot n), the first time and the second time. The target time is be a time when the terminal triggers contiguous partial sensing.

The terminal determines the time range based on the target time, the first time, and the second time in a case that a physical layer of the terminal has received a resource selection or a resource reselection indication transmitted by a Media Access Control (MAC) layer of the terminal at the target time (e.g. the target slot n) and the terminal operates in a mode of resource selection based on partial sensing.

The operation of the terminal determining the time range based on the target time, the first time, and the second time may include the following operation. The terminal determines the range from the third time to the fourth time as the time range. The third time is the sum of the target time and the first time. The fourth time is the sum of the target time and the second time.

**In** some embodiments, the number of slots within the time range may be 0. **In** other embodiments, the number of slots within the time range may not be 0.

**In** a case that the number of slots in the time range is 0, both the first time and the second time are 0, and both the third time and the fourth time may be target times. **In** a case that the number of slots in the time range is not 0, both the first time and the second time are not 0, the third time is greater than the target time, and the fourth time is less than the serial number of the starting slot of the resource selection window.

**In** operation S302, the terminal performs resource exclusion on a resource in a third number of candidate slots where a reserved resource corresponding to sensed sidelink information within the time range is located based on a sensing result within the time range.

**In** embodiments of the present disclosure, the candidate slot may include the first number of candidate slots or the third number of candidate slots as described below. The first number of candidate slots may be the first number of slots in the resource selection window, and the third number of candidate slots may be the third number of slots in the resource selection window. The first number of candidate slots or the third number of candidate slots may be continuous or discontinuous resources. For example, the first number of candidate slots or the third number of candidate slots may be continuous slots or periodically continuous slots.

The serial number of the starting slot in the candidate slots may be greater than or equal to the serial number of the starting slot of the resource selection window, and the serial number of the ending slot in the candidate slots may be less than or equal to the serial number of the ending slot of the resource selection window.

The serial number of the starting slot of the resource selection window may be the sum of the serial number of the slot triggering the resource selection or reselection and the first slot value. The first slot value is greater than or equal to 0 and less than or equal to the second slot value T_{proc,1}. The second slot value is determined based on the subcarrier spacing.

The serial number of the ending slot of the resource selection window may be the sum of the value of slot triggering resource selection or reselection and the third slot value. The third slot value is greater than or equal to the fourth slot value and less than or equal to the remaining delay budget value of the service. The fourth slot value is determined by the terminal from a value set based on a priority of the transmitted SL information.

When the number of slots within the time range is 0, the terminal cannot obtain the sensing result within the time range, so the exclusion is not performed on the resource in the candidate slot corresponding to the time range. In this case, the terminal may select a resource for transmitting the SL information from the resource corresponding to the candidate slot corresponding to the time range.

When the number of slots within the time range is not 0, the terminal may obtain the sensing result within the time range, and then may perform exclusion on the resource in the candidate slot corresponding to the time range based on the sensing result. For example, when the terminal has sensed the SL information within the time range, the terminal may determine the reserved resource corresponding to the SL information in the candidate slot based on the sensed SL information, exclude the reserved resource in the resources corresponding to the candidate slots, and obtain the target candidate resource. The terminal may select the resource for transmitting the SL information from the target candidate resource. For another example, if the terminal has not sensed the PSCCH within the time range, the terminal cannot select the resource reserved for the sensed PSCCH from the candidate slots, so that the terminal may select the resource for transmitting the SL information from the resources corresponding to the candidate slots.

In some embodiments, the terminal may use the second resource selection mode, determine reserved resource within the candidate slots based on the sensed SL information, and exclude reserved resource in the candidate slots.

After the terminal selects a resource for transmitting the SL information, the terminal may transmit the SL information, for example, the SCI and/or the SL data information, to another terminal or the network device through the selected resource.

In some embodiments, the operation of performing exclusion on a resource in the candidate slot may include performing resource exclusion on all available resources in the candidate slots.

In other embodiments, the operation of performing exclusion on a resource in the candidate slot may include performing resource exclusion on a part of available resources in the candidate slots. The part of the available resources in the candidate slots is determined by performing resource exclusion on all the available resources in the candidate slots. For example, the terminal may perform the following operations. The terminal determines sensing windows for periodic partial sensing. Based on the sensing results in the sensing windows, the terminal performs resource exclusion on all available resources in the candidate slots corresponding to the sensing windows to obtain the part of available resources in the candidate slots.

In the embodiments of the present disclosure, the terminal first determines the time range for contiguous partial sensing, and then performs resource exclusion on a resource in a third number of candidate slots where a reserved resource corresponding to sensed sidelink information within the time range is located based on the sensing result within the time range, so that the time-frequency resource reserved by the SL information is obtained and excluded by decoding the detected SL information, thus avoiding resource collision and improving the reliability of communication.

In some embodiments, in a case that the first delay (d) is less than a specific value, or the first delay satisfies the first condition, the terminal determines that both the first time and the second time are 0. The first delay is the remaining delay corresponding to the to-be-transmitted data packet of the terminal. In this way, the terminal may determine that both the first time and the second time are the target time.

In the case that the first delay satisfies the first condition, the number of slots within the range from the fifth time to the sixth time (for example, which may be the serial number of the sixth slot) is less than the sum of the minimum number of slots required by the terminal for sensing and the first number of slots.

The fifth time is determined based on the target time and the second delay, the second delay is a delay between the seventh time and the eighth time, the seventh time is a time when the terminal has obtained a resource selection or a resource reselection indication, and the eighth time is a time when the terminal performs channel sensing according to the indication.

The sixth time is determined based on the target time and the first delay.

**In** some embodiments, the fifth time (for example, which may be the serial number of the fifth slot) may be determined based on the sum of the target time (for example, which may be the serial number of the target slot) and the second delay. **In** the invention, the fifth time is the sum of the target time and the second delay. That is, the fifth time is n+T₀.

The sixth time may be determined based on the sum of the target time and the first number of slots. For example, the sixth time may be the sum of the target time and the first number of slots. That is, the sixth time is n+d.

**In** some embodiments, the first number of slots (delta) is determined based on at least one of: network configuration information, pre-configuration information, or pre-defined information.

For example, the first number of slots may be at least one of a value configured by the network, a pre-configured value, and a pre-defined value.

**In** other embodiments, the value range of the first number of slots (delta) is from the first value (T₁) to a first set value. The time corresponding to the first value is the time required for the terminal to prepare the physical SL channel.

**In** embodiments of the present disclosure, the first set value may be a fixed value. For example, the first set value may be 31 or other values. **In** other embodiments, the first set value may be a non-fixed value. For example, the first set value is determined based on at least one of network configuration information, pre-configuration information or pre-defined information.

**In** some embodiments, the first value is greater than or equal to 0 and less than or equal to a second value ( ${T}_{proc , 1}^{SL}$), and the time corresponding to the second value is the maximum time allowed for the terminal to prepare the physical SL channel.

An embodiment in which the terminal determines the time range is described below.

The third time may be n+TA1, and the fourth time may be n+TA2. The terminal determines that the number of slots within the time range is 0, that is, the terminal determines that the values of TA1 and TA2 are both 0.

If the physical layer of the terminal has received the resource selection or resource reselection indication transmitted by the MAC layer of the terminal in the slot n, and the terminal currently operates in the mode of resource selection based on partial sensing, when the remaining delay requirement d of the to-be-transmitted data packet (remaining packet delay budget) (remaining delay requirement may correspond to the above remaining delay) indicated by the MAC layer is less than a specific condition, and the resource pool in which the terminal currently operates allows a random resource selection, the physical layer of the terminal may set the values of TA1 and TA2 to zero. The specific condition may include that the number of slots within the range [n+T₀, n+d] is less than Ymin + delta.

The value of T₀ may include 0 or 1, which indicates the time required from obtaining resource selection or reselection indication from the MAC layer by the physical layer of the terminal to performing channel sensing according to the indication.

Ymin represents the minimum number of candidate slots that the terminal needs to guarantee when performing partial sensing.

The value of delta may be configured by the network, pre-configured, or predefined. For example, the value of delta may be 31, so that the terminal may have sufficient time to sense the SCI for which a candidate slot may be reserved before the selected first candidate slot. For another example, the value of delta may be T₁, so that the terminal may sense the slots before the selected first candidate slot as much as possible to discover possible resource reservations. For another example, the value of delta may be configured or pre-configured between [T₁, 31]. $0 \leq {T}_{1} \leq {T}_{proc , 1}^{SL}$ may be satisfied by the T₁. T₁ may represent the time required for the terminal to prepare the corresponding physical channel according to the determined SL resource, and the value of T₁ is determined by the terminal implementation. The value of ${T}_{proc , 1}^{SL}$ is related to the subcarrier spacing of the current carrier or the parameter µ_{SL} corresponding to the subcarrier spacing. The relationship between the value of ${T}_{proc , 1}^{SL}$ and the parameter µ_{SL} corresponding to the subcarrier spacing is illustrated in Table 1.

**Table 1**

| *µ_{SL}* | ${T}_{proc , 1}^{SL}$ [slot] |
|---|---|
| 0 | 3 |
| 1 | 5 |
| 2 | 9 |
| 3 | 17 |

In some embodiments, the terminal may set the values of TA1 and TA2 to zero if at least one of the following conditions is additionally satisfied:
the current resource pool allowing a random resource selection;
the current resource pool being not allows to reserve a resource for a new transmission of a Transport Block (TB).

In the embodiments of the present disclosure, after obtaining the values of TA1 and TA2, it may be determined that the third time is the sum of the target time (for example, the serial number n of the target slot) and TA1, and the fourth time is the sum of the target time (for example, the serial number n of the target slot) and TA2.

In some embodiments, the terminal may determine the time range in the following manner.

The terminal determines the time range based on the target time (n), the first delay (d) and the minimum number (Ymin) of slots required by the terminal for sensing. The first delay is the remaining delay corresponding to the to-be-transmitted data packet of the terminal.

In some embodiments, the operation of the terminal determining the time range based on the target time (n), the first delay (d), and the minimum number (Ymin) of slots required for the terminal for sensing may include the following operation.

The terminal determines the time range based on a size relationship between the number of slots within the range from the fifth time (n+T₀) to the ninth time (for example, the serial number of the ninth slot) (n+D) and the second number of slots ( $Ymin + 31 + {T}_{proc , 0}^{SL} + {T}_{proc , 1}^{SL}$).

The fifth time is determined based on the target time and the second delay (T₀), the second delay is a delay between the seventh time and the eighth time, the seventh time is a time when the terminal has obtained a resource selection or a resource reselection indication, and the eighth time is a time when the terminal performs channel sensing according to the indication.

The ninth time (n+D) is determined based on the target time (n) and the third delay (D), the third delay is determined based on the first delay (d), and the first delay is the remaining delay corresponding to the to-be-transmitted data packet of the terminal.

The second number of slots is determined based on the minimum number (Ymin) of slots, the first set value, the second value ( ${T}_{proc , 1}^{SL}$) and the third value ( ${T}_{proc , 0}^{SL}$), the time corresponding to the second value is the maximum time allowed for the terminal to prepare the physical SL channel, and the time corresponding to the third value is the time for the terminal to process the channel sensing result.

In some embodiments, the fifth time (for example, the serial number of the fifth slot) may be determined based on the sum of the target time and the second delay. For example, the fifth time is the sum of the target time and the second delay. That is, the fifth time is n+T₀.

In some embodiments, the ninth time (for example, the serial number of the ninth slot) may be determined based on the sum of the target time and the third delay. In the invention, the ninth time is the sum of the target time and the third delay. That is, the ninth time is n+D.

The second number of slots may be determined based on the sum of the minimum number (Ymin) of slots, the first set value, the second value ( ${T}_{proc , 1}^{SL}$), and the third value ( ${T}_{proc , 0}^{SL}$). For example, the second number of slots may be the sum of the minimum number of slots (Ymin), the first set value, the second value ( ${T}_{proc , 1}^{SL}$), and the third value ( ${T}_{proc , 0}^{SL}$). That is, the second number of slots is $Ymin + 31 + {T}_{proc , 0}^{SL} + {T}_{proc , 1}^{SL}$.

The third delay is less than or equal to the first delay.

In some embodiments, the operation of the terminal determining the time range based on the size relationship between the number of slots within the range from the fifth time (n+T₀) to the ninth time (n+D) and the second number of slots ( $Ymin + 31 + {T}_{proc , 0}^{SL} + {T}_{proc , 1}^{SL}$) includes the following operation.

In a case that the number of slots within the range from the fifth time (n+T₀) to the ninth time (n+D) is greater than or equal to the second number of slots, the terminal determines the first number (Y) of candidate slots within a range from the tenth time (for example, the serial number of the tenth slot) (n+T₀+31) to the ninth time (n+D) and determines the time range based on the first number (Y) of candidate slots.

Wherein the first number is greater than or equal to the minimum number of slots (Ymin) required by the terminal for sensing and is less than or equal to the second number, and the second number is determined based on the third delay (D), the second delay (T₀) and the first set value.

The tenth time is determined based on the target time, the second delay (T₀) and the first set value.

In some embodiments, the tenth time may be determined based on a sum of the target time, the second delay (T₀), and the first set value. For example, the tenth time may be the sum of the target time, the second delay (T₀) and the first set value, so that the tenth time may be n+T₀+31.

The second number may be determined by the result of adding one after subtracting the second delay (T₀) from the third delay (D) and then subtracting the first set value. For example, the second number may be the result of adding one after subtracting the second delay (T₀) from the third delay (D) and then subtracting the first set value, that is, the second number can be D-T₀-31+1, so that the range of the value of the first number may be Ymin ≤Y≤ D-T₀-31+1.

In some embodiments, the operation of determining the time range based on the first number (Y) of candidate slots includes the following operations.

The first time is determined based on the second delay (T₀) and the eleventh time (for example, the serial number of the eleventh slot) (Y0-31-n).

The second time is determined based on the first slot of in the first number (Y) of candidate slots, the second value ( ${T}_{proc , 1}^{SL}$) and the third value ( ${T}_{proc , 0}^{SL}$).

The eleventh time is determined based on the first slot in the first number (Y) of candidate slots, the first set value and the target time (slot n).

In some embodiments, the first time may be determined based on the greater one of the second delay (T₀) and the eleventh time. For example, the greater one of the second delay (T₀) and the eleventh time may be determined as the first time.

The eleventh time may be determined based on the result of subtracting the target time after subtracting the first set value from the serial number of the first slot in the first number (Y) of candidate slots. For example, the eleventh time may be the result of subtracting the target time after subtracting the first set value from the serial number of the first slot in the first number (Y) of candidate slots, so that the eleventh time is Y0-31-n and the first time is max (T₀, Y0-31-n).

The terminal may determine the second time based on the result of subtracting the third value ( ${T}_{proc , 0}^{SL}$) after subtracting the second value ( ${T}_{proc , 1}^{SL}$) from the serial number of the first slot in the first number (Y) of candidate slots. For example, the second time may be the result of subtracting the third value ( ${T}_{proc , 0}^{SL}$) after subtracting the second value ( ${T}_{proc , 1}^{SL}$) from the serial number of the first slot in the first number (Y) of candidate slots, so that the second time is $Y 0 - {T}_{proc , 0}^{SL} - {T}_{proc , 1}^{SL}$ .

In some embodiments, the operation of the terminal determining the time range based on the size relationship between the number of slots within the range from the fifth time (n+T₀) to the ninth time (n+D) and the second number of slots ( $Ymin + 31 + {T}_{proc , 0}^{SL} + {T}_{proc , 1}^{SL}$) includes the following operations.

In a case that the number of slots within the range from the fifth time (n+T₀) to the ninth time (n+D) is less than the second number of slots, the terminal determines the first time based on the second delay (T₀) and the twelfth time (for example, the serial number of the twelfth slot) (D-Ymin-30). The terminal determines the second time based on the target time (slot n), the third delay (D), the minimum number of slots (Ymin), the second value ( ${T}_{proc , 1}^{SL}$) and the third value ( ${T}_{proc , 0}^{SL}$).

The twelfth time is determined based on the third delay (D), the minimum number of slots (Ymin) and the second set value. The second set value is determined based on the first set value.

In this embodiment, the number of slots corresponding to the candidate slots may be greater than or equal to the minimum number of slots (Ymin).

In some embodiments, the terminal may determine the first time based on the greater one of the second delay (T₀) and the twelfth time (D-Ymin-30). For example, the terminal may determine the greater one of the second delay (T₀) and the twelfth time (D-Ymin-30) as the first time.

The twelfth time may be determined based on the result of subtracting the second set value after subtracting the minimum number of slots (Ymin) from the third delay (D). For example, the twelfth time may be the result of subtracting the second set value after subtracting the minimum number of slots (Ymin) from the third delay (D). The second set value may be the result of subtracting one from the first set value, so that the twelfth time may be D-Ymin-30, and the value of the first time TA1 may be max (T₀, D-Ymin-30).

The terminal may determine the second time based on the result that the target time (the serial number n of the target slot) is added with the third delay (D), then the minimum number of slots (Ymin) is subtracted, then one is added, then the second value ( ${T}_{proc , 1}^{SL}$) is subtracted, and then the third value is subtracted. For example, the terminal may determine the second time to the result that the target time (number n of the target slot) is added with the third delay (D), then the minimum number of slots (Ymin) is subtracted, then one is added, then the second value ( ${T}_{proc , 1}^{SL}$) is subtracted, and then the third value is subtracted, so that the value of the second time TA2 may be $n + D - Ymin + 1 - {T}_{proc , 0}^{SL} - {T}_{proc , 1}^{SL}$.

An embodiment in which a terminal determines the time range is described below.

For the initial resource selection or reselection, the terminal may determine the values of TA1 and TA2 according to the time n of triggering the resource selection or reselection, the remaining delay requirement d, and Ymin.

If the physical layer of the terminal has received the resource selection or resource reselection indication transmitted by the MAC layer of the terminal in the slot n, the terminal currently operates in the mode of resource selection based on partial sensing, and the number of slots within the range [n+T₀, n+D] is greater than or equal to $Ymin + 31 + {T}_{proc , 0}^{SL} + {T}_{proc , 1}^{SL}$, the terminal may determine Y candidate slots within the range [n+T₀+31, n+D]. Where Ymin≤Y≤D-T₀-31+1. The specific value of Y and the positions of Y candidate slots may be determined by the terminal implementation. The terminal then determines that the value of TA1 may be max (T₀, Y0-31-n) and the value of TA2 may be $Y 0 - {T}_{proc , 0}^{SL} - {T}_{proc , 1}^{SL}$ . Y0 may be the serial number of the first slot in the Y candidate slots. In this method, at least 31 slots are sensed before Y candidate slots selected by the terminal, thereby discovering SCI for which the Y candidate slots may be reserved.

If the physical layer of the terminal has received the resource selection or resource reselection indication transmitted by the MAC layer of the terminal in the slot n, the terminal currently operates in the mode of resource selection based on partial sensing, and the number of slots within the range [n+T₀, n+D] is less than $Ymin + 31 + {T}_{proc , 0}^{SL} + {T}_{proc , 1}^{SL}$, the value of TA1 may be max (T₀, D-Ymin-30), and the value of TA2 may be $n + D - Ymin + 1 - {T}_{proc , 0}^{SL} - {T}_{proc , 1}^{SL}$. With this method, the number of candidate slots may be made greater than or equal to Ymin, and for the selected at least Ymin candidate slots, the terminal can obtain sensing results as many as possible.

D represents the maximum value of the resource selection range determined by the terminal, and D≤d. For example, D=d, or D=d-△, and the value of △ may be configured by the network, pre-configured, or predefined.

The ${T}_{proc , 0}^{SL}$ is the time when the terminal processes the channel sensing result. The value of ${T}_{proc , 0}^{SL}$ is related to the subcarrier spacing of the current carrier or the parameter µ_{SL} corresponding to the subcarrier spacing. The relationship between the value of ${T}_{proc , 0}^{SL}$ and the parameter µ_{SL} corresponding to the subcarrier spacing is illustrated in Table 2.

**Table 2**

| *µ_{SL}* | ${T}_{proc , 0}^{SL}$ [slot] |
|---|---|
| 0 | 1 |
| 1 | 1 |
| 2 | 2 |
| 3 | 4 |

In some embodiments, the terminal may determine the values of TA1 and TA2 according to the method provided by the embodiments of the present disclosure in a case that at least one of the following conditions is additionally satisfied:
the current resource pool allowing a random resource selection;
the current resource pool being not allows to reserve a resource for a new transmission of a TB.

In some embodiments, the operation of the terminal determining the time range based on the target time (n), the first delay (d) and the minimum number (Ymin) of slots required by the terminal for sensing includes the following operations.

The terminal determines the third number (Y) of candidate slots within a range from the fifth time (n+T₀) to the ninth time (n+D).

The terminal determines the time range based on the third number (Y) of candidate slots.

The fifth time is determined based on the target time and the second delay (T₀), the second delay is a delay between the seventh time and the eighth time, the seventh time is a time when the terminal has obtained a resource selection or a resource reselection indication, and the eighth time is a time when the terminal performs channel sensing according to the indication.

The ninth time is determined based on the target time (n) and the third delay (D). The third delay is determined based on the first delay (d).

The third number is greater than or equal to the minimum number (Ymin) of slots required by the terminal for sensing, and is less than or equal to the fourth number. The fourth number is determined based on the third delay (D) and the second delay (T₀).

For the description of the fifth time and the ninth time, reference may be made to the description of the above embodiments.

In some embodiments, the fourth number may be determined based on a result of adding one after subtracting the second delay (T₀) from the third delay (D). In the invention, the fourth number is the result of adding one after subtracting the second delay (T₀) from the third delay (D), so that the fourth number is D-T₀+1, and the third number (Y) is Ymin≤Y≤D-T₀+1.

In some embodiments, the operation of the terminal determining the time range based on the third number (Y) of candidate slots includes the following operations.

The terminal determines the first time based on the second delay (T₀) and the eleventh time (Y0-31-n).

The terminal determines the second time based on the first slot in the third number (Y) of candidate slots, the second value ( ${T}_{proc , 1}^{SL}$) and the third value ( ${T}_{proc , 0}^{SL}$).

The eleventh time is determined based on the first slot in the third number (Y) of candidate slots, the first set value and the target time (slot n).

The time corresponding to the second value is the maximum time allowed for the terminal to prepare the physical SL channel, and the time corresponding to the third value is the time for the terminal to process the channel sensing result.

In some embodiments, the terminal may determine the first time based on the greater one of the second delay (T₀) and the eleventh time (for example, the serial number of the eleventh slot). For example, the terminal may determine the greater one of the second delay (T₀) and the eleventh time as the first time.

The eleventh time may be determined based on the result of subtracting the target time after subtracting the first set value from the serial number of the first slot in the third number (Y) of candidate slots. For example, the eleventh time may be the result of subtracting the target time after subtracting the first set value from the serial number of the first slot in the third number (Y) of candidate slots, so that the eleventh time may be Y0-31-n, and the value of the first time TA1 may be max (T₀, Y0-31-n).

The terminal may determine the second time based on the result of subtracting the third value after subtracting the second value from the serial number of the first slot in the third number (Y) of candidate slots. For example, the terminal may determine the second time to be the result of subtracting the third value after subtracting the second value from the serial number of the first slot in the third number (Y) of candidate slots, so that the value of the second time TA2 may be $Y 0 - {T}_{proc , 0}^{SL} - {T}_{proc , 1}^{SL}$.

An embodiment in which a terminal determines the time range is described below.

For the initial resource selection or reselection, if the resource pool allows the random resource selection, the terminal determines the values of TA1 and TA2 according to the time n of triggering the resource selection or reselection and Ymin.

If the physical layer of the terminal has received the resource selection or resource reselection indication transmitted by the MAC layer of the terminal in the slot n, the terminal currently operates in the mode of resource selection based on partial sensing, and the current resource pool allows a random resource selection, the terminal determines Y candidate slots within the range [n+T₀, n+ D]. Where Ymin ≤Y≤ D-T₀+1. The specific value of Y and the positions of Y candidate slots are determined by the terminal implementation. The terminal may then determine that the value of TA1 is max (T₀, Y0-31-n) and the value of TA2 is $Y 0 - {T}_{proc , 0}^{SL} - {T}_{proc , 1}^{SL}$. Y0 is the first slot in the Y candidate slots. In this way, the terminal can be prevented from selecting candidate sub-frames that are all near the remaining delay requirement, thereby reducing the probability of resource collision between different terminals, and avoiding the problem that the resource cannot be selected within the remaining delay requirement when the resource is re-selected due to the occurrence of resource pre-emption or re-evaluation.

D may represent the maximum value of the resource selection range determined by the terminal, and D≤d. For example, D=d, or D=d-△, and the value of △ may be configured by the network, pre-configured, or predefined.

In some embodiments, the method further includes the following operations.

The terminal determines the thirteenth time (for example, the serial number of the thirteenth slot) and the fourteenth time (for example, the serial number of the fourteenth slot). The number of slots within the range from the thirteenth time to the fourteenth time is greater than or equal to the fifth number (S).

The terminal determines the first time and the second time based on the fourteenth time, or the terminal determines the first time and the second time based on the thirteenth time and the fourteenth time.

In some embodiments, the fifth number (S) is determined based on at least one of: network configuration information, pre-configuration information, predefined information, the first set value, a priority of to-be-transmitted data, or a first delay (d). The first delay is the remaining delay corresponding to the to-be-transmitted data packet of the terminal.

In some embodiments, the fifth number (S) is determined based on the first delay (d), the minimum number (Ymin) of slots required for the terminal for sensing, the second value ( ${T}_{proc , 1}^{SL}$), and the third value ( ${T}_{proc , 0}^{SL}$).

The first delay is the remaining delay corresponding to the to-be-transmitted data packet of the terminal.

The time corresponding to the second value is the maximum time allowed for the terminal to prepare the physical SL channel, and the time corresponding to the third value is the time for the terminal to process the channel sensing result.

In some embodiments, the fifth number (S) may be determined based on the result of subtracting the third value ( ${T}_{proc , 0}^{SL}$) after subtracting the minimum number (Ymin) of slots and the second value ( ${T}_{proc , 1}^{SL}$) from the first delay (d). For example, the fifth number (S) may be the result of subtracting the third value ( ${T}_{proc , 0}^{SL}$) after subtracting the minimum number (Ymin) of slots and the second value ( ${T}_{proc , 1}^{SL}$) from the first delay (d), so that the fifth number (S) is d-Ymin- ${T}_{proc , 0}^{SL} - {T}_{proc , 1}^{SL}$.

In some embodiments, the operation of terminal determining the first time and the second time based on the thirteenth time and the fourteenth time, may include the following operation.

In a case that the third number (Y) of candidate slots can be determined within the range from the fifteenth time (for example, the serial number of fifteenth slot) ( $n + TA 2 + {T}_{proc , 0}^{SL} + {T}_{1}$) to the ninth time (n+D), the terminal determines the thirteenth time and the fourteenth time as the first time and the second time, respectively.

The fifteenth time is determined based on the target time (n), the fourteenth time, the third value ( ${T}_{proc , 0}^{SL}$) and the first value (T₁). The time corresponding to the third value is the time for the terminal to process the channel sensing result. The time corresponding to the first value is the time required for the terminal to prepare the physical SL channel.

The ninth time (n+D) is determined based on the target time (n) and the third delay (D). The third delay is determined based on the first delay (d). The first delay is the remaining delay corresponding to the to-be-transmitted data packet of the terminal.

The third number of candidate slots is greater than or equal to a minimum number (Ymin) of slots required by the terminal for sensing, and is less than or equal to the fourth number. The fourth number is determined based on the third delay (D) and the second delay (T₀).

In such an embodiment, the number of slots within the range from the fifteenth time ( $n + TA 2 + {T}_{proc , 0}^{SL} + {T}_{1}$) to the ninth time (n+D) may be greater than or equal to the minimum number (Ymin) of slots.

In some embodiments, the fifteenth time may be determined based on the sum of the target time, the fourteenth time, a third value ( ${T}_{proc , 0}^{SL}$) and the first value (T₁). For example, the fifteenth time may be the sum of the target time, the fourteenth time, the third value ( ${T}_{proc , 0}^{SL}$), and the first value (T₁), so that the fifteenth time is $n + TA 2 + {T}_{proc , 0}^{SL} + {T}_{1}$.

For the description of the ninth time and the third number, reference may be made to the description of the above embodiments.

In this embodiment, the thirteenth time may be the same as the first time, and the fourteenth time may be the same as the second time.

In some embodiments, the operation of terminal determining the first time and the second time based on the fourteenth time may include the following operation.

In a case that the third delay (D) is the same as the first delay (d) and the number of slots within the range from the fifteenth time (for example, the serial number of the fifteenth slot) ( $n + TA 2 + {T}_{proc , 0}^{SL} + {T}_{1}$) to the ninth time (n+D) is less than the minimum number (Ymin) of slots required by the terminal for sensing, the terminal determines that both the first time and the second time are 0.

The fifteenth time is determined based on the target time (n), the fourteenth time, the third value ( ${T}_{proc , 0}^{SL}$) and the first value (T₁). The time corresponding to the third value is the time for the terminal to process the channel sensing result. The time corresponding to the first value is the time required for the terminal to prepare the physical SL channel.

The ninth time (n+D) is determined based on the target time (n) and the third delay (D). The third delay is determined based on the first delay (d). The first delay is the remaining delay corresponding to the to-be-transmitted data packet of the terminal.

In this embodiment, the value of TA1 and the value of TA2 are both 0. The third time and the fourth time are both n. That is, the third time and the fourth time are both the target time.

In the embodiments of the present disclosure, the thirteenth time and the fourteenth time may be determined firstly. The number of slots within the range from the thirteenth time to the fourteenth time is greater than or equal to the fifth number. Then whether the number of slots within the range from the fifteenth time ( $n + TA 2 + {T}_{proc , 0}^{SL} + {T}_{1}$) to the ninth time (n+D) is greater than or equal to the minimum number of slots is determined based on the determined fourteenth time. In a case that the number of slots within the range from the fifteenth time ( $n + TA 2 + {T}_{proc , 0}^{SL} + {T}_{1}$) to the ninth time (n+D) is greater than or equal to the minimum number of slots, the terminal determines the thirteenth time and the fourteenth time as the first time and the second time, respectively. In a case that the number of slots within the range from the fifteenth time ( $n + TA 2 + {T}_{proc , 0}^{SL} + {T}_{1}$) to the ninth time (n+D) is less than the minimum number of slots, the terminal determines that both the first time and the second time are 0.

An embodiment in which a terminal determines the time range is described below.

For the initial resource selection or reselection, the terminal may select the values of TA1'and TA2' according to the time n of triggering the resource selection or reselection, such that the number of slots within the range [n+TA1', n+TA2'] is greater than or equal to S.

If the physical layer of the terminal has received the resource selection or resource reselection indication transmitted by the MAC layer of the terminal in slot n, and the terminal currently operates in the mode of resource selection based on partial sensing, the terminal determines the values of TA1 'and TA2' according to its own implementation, such that the number of slots within the range [n+TA1', n+TA2'] is greater than or equal to S.

The value of S may be based on network configuration, pre-configuration, or predefinition. For example, the value of S may be configured by the network, pre-configured, or predefined to 31. In some embodiments, the value of S may be related to the priority of to-be-transmitted data and the value of S may be different for different transmission priorities. For example, for a higher priority of to-be-transmitted data, the value of S may be less. In some embodiments, the value of S may also be related to the remaining delay requirement d of the to-be-transmitted data. For example, the smaller the remaining delay requirement, the less the value of S may be. In some embodiments, the value of S may also be $d - Ymin - {T}_{proc , 0}^{SL} - {T}_{proc , 1}^{SL}$.

The terminal then determines Y candidate slots within the range [ $n + TA 2 ′ + {T}_{proc , 0}^{SL} + T 1$,n+D]. Where Ymin ≤Y≤D-T0+1. The specific value of Y and the positions of the Y candidate slots are determined by the terminal implementation. $0 \leq {T}_{1} \leq {T}_{proc , 1}^{SL}$. The specific value of T₁ may be determined based on the terminal implementation, so that the terminal may set TA1=TA1' and TA2=TA2'.

In some embodiments, if the number of slots within the range [ $n + TA 2 + {T}_{proc , 0}^{SL} + {T}_{1}$ , n+D] is less than Ymin when D=d, and current resource pool allows a random resource selection, the terminal sets the values of TA1 and TA2 to zero.

D represents the maximum value of the resource selection range determined by the terminal, and D≤d. For example, D=d, or D=d-△, and the value of △may be configured by the network, pre-configured, or predefined.

In some embodiments, the method further includes the following operations.

The terminal determines the third number of candidate slots within the range from the sixteenth time (for example, the serial number of the sixteenth slot) (n+D-Y+1) to the ninth time (n+D).

The terminal determines the first time and the second time based on the third number of candidate slots.

The sixteenth time is determined based on the ninth time and the third number.

The third number is greater than or equal to the minimum number (Ymin) of slots required by the terminal for sensing, and is less than or equal to the fourth number. The fourth number is determined based on the third delay (D) and the second delay (T₀).

The second delay is a delay between the seventh time and the eighth time. The seventh time is a time when the terminal has obtained a resource selection or a resource reselection indication. The eighth time is a time when the terminal performs channel sensing according to the indication.

The ninth time (n+D) is determined based on the target time (n) and a third delay (D). The third delay is determined based on the first delay (d). The first delay is the remaining delay corresponding to the to-be-transmitted data packet of the terminal.

For the description of the ninth time and the third number, reference may be made to the description of the above embodiments.

In some embodiments, the sixteenth time may be determined based on the result of adding one after subtracting the third number from the ninth time. For example, the sixteenth time may be the result of the result of adding one after subtracting the third number from the ninth time. That is, the sixteenth time is n+D-Y+1.

In some embodiments, the operation of the terminal determining the first time and the second time based on the third number of candidate slots may include the following operations.

The terminal determines the first time based on the second delay (T₀) and the seventeenth time (for example, the serial number of the seventeenth slot) (Y0-31-n).

The terminal determines the second time based on the first slot in the third number of candidate slots, the second value ( ${T}_{proc , 1}^{SL}$) and the third value ( ${T}_{proc , 0}^{SL}$).

The seventeenth time is determined based on the first slot in the third number (Y) of candidate slots, the first set value and the target time.

The time corresponding to the second value is the maximum time allowed for the terminal to prepare the physical SL channel, and the time corresponding to the third value is the time for the terminal to process the channel sensing result.

In some embodiments, the seventeenth time may be determined based on the result of subtracting the target time after subtracting the first set value from the serial number of the first slot in the third number (Y) of candidate slots. For example, the seventeenth time may be the result of subtracting the target time after subtracting the first set value from the serial number of the first slot in the third number (Y) of candidate slots, so that the seventeenth time is Y0-31-n.

The terminal may determine the first time based on the greater one of the second delay and the seventeenth time. For example, the terminal may determine the greater one of the second delay and the seventeenth time as the first time, so that the first time TA1 may be max (T₀, Y0-31-n).

The terminal may determine the second time based on the result of subtracting the third value ( ${T}_{proc , 0}^{SL}$) after subtracting the second value ( ${T}_{proc , 1}^{SL}$) from the serial number of the first slot in the third number of candidate slots. For example, the terminal may determine the second time to be the result of subtracting the third value ( ${T}_{proc , 0}^{SL}$) after subtracting the second value ( ${T}_{proc , 1}^{SL}$) from the serial number of the first slot in the third number of candidate slots, so that the second time TA2 is $Y 0 - {T}_{proc , 0}^{SL} - {T}_{proc , 1}^{SL}$.

An embodiment in which a terminal determines the time range is described below.

For initial resource selection or reselection, the terminal first determines Y candidate slots, and then determines the values of TA1 and TA2 based on the position of the first slot in the Y candidate slots.

If the physical layer of the terminal has received a resource selection or a resource reselection indication transmitted by the MAC layer of the terminal in the slot n, and the terminal currently operates in a mode of resource selection based on partial sensing, the terminal may determine Y candidate slots within the range [n+T₀, n+D]. In some embodiments, the Y candidate slots may be within [n+D-Y+1, n+D]. Where Ymin≤Y≤ D-T0+1. The specific value of Y and the positions of Y candidate slots are determined by the terminal implementation. The terminal then determines that the value of TA1 is max (T0, Y0-31-n) and the value of TA2 is $Y 0 - {T}_{proc , 0}^{SL} - {T}_{proc , 1}^{SL}$.

It should be noted that embodiments of the present disclosure provide the following manner for determining the third number of candidate slots.

The terminal determines the third number (Y) of candidate slots within a range from the fifth time (n+T₀) to the ninth time (n+D).

The third number (Y) of candidate slots is determined within the range from the fifteenth time ( $n + TA 2 + {T}_{proc , 0}^{SL} + {T}_{1}$) to the ninth time (n+D).

The terminal determines the third number of candidate slots within the range from the sixteenth time (n+D-Y+1) to the ninth time (n+D).

The time domain resources of the third number of candidate slots determined from different ranges may be the same or different.

In some embodiments, both the second value and the third value may be determined based on the subcarrier spacing.

In a case that the parameters (µ_{SL}) corresponding to the subcarrier spacings are 0, 1, 2 and 3 respectively, the second values are 3, 5, 9 and 17 respectively. In a case that the parameters corresponding to the subcarrier sapcings are 0, 1, 2 and 3 respectively, the third values are 1, 1, 2 and 4 respectively.

In some embodiments, the operation of the terminal determining the time range of the PSCCH for contiguous partial sensing includes the following operation.

The time range is determined in a case that the terminal satisfies at least one of the following:
a resource pool in which the terminal currently operates allowing a random resource selection; or
the resource pool in which the terminal currently operates being not allowed to reserve a resource for a new transmission of a TB.

In some embodiments, the third delay (D) is equal to the first delay (d), or the third delay (D) is equal to the result of subtracting the target value (△) from the first delay (d).

The target value is determined by at least one of: network configuration information, pre-configuration information or predefined information.

In some embodiments, the operation of the terminal performing resource exclusion on the resource in the candidate slot corresponding to the time range based on the sensing result within the time range may include the following operation.

In a case that the sensing result indicates that SCI has been detected within the time range and a resource reserved by the SCI is within the candidate slot, resource exclusion is performed on the resource in the candidate slot.

In some embodiments, the operation of in a case that the sensing result indicates that the SCI has been detected within the time range and the resource reserved by the SCI is within the candidate slot, performing resource exclusion on the resource in the candidate slot includes the following operation.

In a case that the sensing result indicates that the SCI has been detected within the time range, the resource reserved by the SCI is within the candidate slot, and the Reference Signal Received Power (RSRP) of a PSCCH corresponding to the SCI or a RSRP of a Physical Sidelink Shared Channel (PSSCH) scheduled by the PSCCH is greater than a power threshold (SL-RSRP), the resource exclusion is performed on the resource in the candidate slot.

In some embodiments, the operation of performing the resource exclusion on the resource in the candidate slot includes the following operation.

The resource exclusion is performed on the resource reserved by the SCI in the resource in the candidate slot.

In some embodiments, the method further includes the following operations.

A target candidate resource is obtained. The target candidate resource is determined after performing the resource exclusion on the resource in the candidate slot.

A resource for transmitting SL information is selected from the target candidate resource.

In some embodiments, the operation of selecting the resource for transmitting the SL information from the target candidate resource may include randomly selecting a resource for transmitting the SL information from the target candidate resource.

In some embodiments, the operation of selecting the resource for transmitting the SL information from the target candidate resource may include the following operation. In a case that a set of Q resources or multiple sets of Q resources exist in the target candidate resource, and the time interval between any two resource is greater than or equal to a specific slot value and less than or equal to 32 in the set of Q resources or any set of the multiple sets of Q resources, the set of Q resources or any set of the multiple sets of Q resources is determined as the resources for transmitting the SL information. Q is the number of resources determined by the terminal for transmitting one or more TBs.

In some embodiments, in a case that the RSRP is greater than the power threshold, the resource exclusion is performed on the resource reserved by the SCI in the resources within the candidate slots. In a case that the remaining resources, which are obtained after performing the resource exclusion on the resource reserved by the SCI within the candidate slots, are less than X% of the total resources before the resource exclusion within the candidate slots, the SL-RSRP may be raised by 3dB, and then whether the RSRP corresponding to the SCI is greater than the raised SL-RSRP is continuously determined. The resource, which is reserved by the SCI corresponding to the RSRP greater than the raised SL-RSRP, within the candidate slots is excluded to obtain the remaining resources after the exclusion, which exceed X% of the total resources before the resource exclusion within the candidate slots. The possible values of the X are {20, 35, 50}, and the terminal determines the parameter X from the set of values according to the priority of the to-be-transmitted data. At the same time, the SL-RSRP is related to the priority carried in the PSCCH sensed by the terminal and the priority of the to-be-transmitted data of the terminal. The terminal may use the remaining resources after resource exclusion in the candidate slots as the target candidate resources.

Based on the foregoing embodiment, the embodiments of the present disclosure provide an apparatus for determining a resource. Various units and various modules contained in various units included in the apparatus may be implemented by a processor in a terminal. Of course, they may be implemented by specific logic circuits.

FIG. 4 is a schematic diagram of a composition structure of an apparatus for determining a resource provided by the embodiments of the present disclosure. The apparatus for determining a resource may be applied to the above-mentioned terminal. As illustrated in FIG. 4, the apparatus 400 for determining a resource includes a determination unit 401 and an exclusion unit 402.

The determination unit 401 is configured to determine a time range for contiguous partial sensing.

The exclusion unit 402 is configured to perform resource exclusion on a resource in a third number of candidate slots where a reserved resource corresponding to sensed sidelink information within the time range is located based on a sensing result within the time range.

In some embodiments, the determination unit 401 is further configured to determine the time range based on a target time, the first time and the second time. The target time is a time when the terminal triggers the contiguous partial sensing.

In some embodiments, the determination unit 401 is further configured to determine the time range based on a target time, the first time, and the second time in a case that a physical layer of the terminal has received a resource selection or a resource reselection indication transmitted by a Media Access Control (MAC) layer of the terminal at the target time and the terminal operates in a mode of resource selection based on partial sensing.

In some embodiments, the determination unit 401 is further configured to determine a range from the third time to the fourth time as the time range. The third time is a sum of the target time and the first time, and the fourth time is a sum of the target time and the first time.

In some embodiments, the determination unit 401 is configured to in a case that a first delay satisfies a first condition, determine that both the first time and the second time are 0. The first delay is a remaining delay corresponding to a to-be-transmitted data packet of the terminal.

In some embodiments, in the case that the first delay satisfies the first condition, a number of slots within a range from the fifth time to the sixth time is less than a sum of a minimum number of slots required by the terminal for sensing and a first number of slots.

The fifth time is determined based on the target time and the second delay, the second delay is a delay between the seventh time and the eighth time, the seventh time is a time when the terminal has obtained a resource selection or a resource reselection indication, and the eighth time is a time when the terminal performs channel sensing according to the indication.

The sixth time is determined based on the target time and the first delay.

In some embodiments, the first number of slots is determined based on at least one of: network configuration information, pre-configuration information, or predefined information.

In some embodiments, a range for the first number of slots is from the first value to the first set value.

A time corresponding to the first value is a time required for the terminal to prepare a physical SL channel.

In some embodiments, the first value is greater than or equal to 0 and less than or equal to a second value, and a time corresponding to the second value is a maximum time allowed for the terminal to prepare the physical SL channel.

In some embodiments, the determination unit 401 is configured for the terminal to determine the time range based on the target time, the first delay and the minimum number of slots required by the terminal for sensing. The first delay is a remaining delay corresponding to a to-be-transmitted data packet of the terminal.

In some embodiments, the determination unit 401 is further configured for the terminal to determine the time range based on a size relationship between the number of slots within a range from the fifth time to the ninth time and the second number of slots.

The fifth time is determined based on the target time and the second delay, the second delay is a delay between the seventh time and the eighth time, the seventh time is a time when the terminal has obtained a resource selection or a resource reselection indication, and the eighth time is a time when the terminal performs channel sensing according to the indication.

The ninth time is determined based on the target time and the third delay, the third delay is determined based on the first delay, and the first delay is the remaining delay corresponding to the to-be-transmitted data packet of the terminal.

The second number of slots is determined based on the minimum number of slots, the first set value, the second value and the third value, a time corresponding to the second value is a maximum time allowed for the terminal to prepare the physical SL channel, and a time corresponding to the third value is a time for the terminal to process a channel sensing result.

In some embodiments, the determination unit 401 is further configured to in a case that the number of slots within the range from the fifth time to the ninth time is greater than or equal to the second number of slots, determine the first number of candidate slots within a range from the tenth time to the ninth time and determine the time range based on the first number of candidate slots.

The first number is greater than or equal to the minimum number of slots required by the terminal for sensing, and is less than or equal to the second number, and the second number is determined based on the third delay, the second delay and the first set value.

The tenth time is determined based on the target time, the second delay, and the first set value.

In some embodiments, the determination unit 401 is further configured to determine the first time based on the second delay and the eleventh time and determine the second time based on the first slot in the first number of candidate slots, the second value, and the third value.

The eleventh time is determined based on the first slot in the first number of candidate slots, the first set value, and the target time.

In some embodiments, the determination unit 401 is further configured to in a case that the number of slots within the range from the fifth time to the ninth time is less than the second number of slots, determine the first time based on the second delay and the twelfth time and determine the second time based on the target time, the third delay, the minimum number of slots, the second value and the third value.

The twelfth time is determined based on the third delay, the minimum number of slots and the second set value, and the second set value is determined based on the first set value.

In some embodiments, the determination unit 401 is further configured to determine the third number of candidate slots within a range from the fifth time to the ninth time and determine the time range based on the third number of candidate slots.

The fifth time is determined based on the target time and the second delay, the second delay is a delay between the seventh time and the eighth time, the seventh time is a time when the terminal has obtained a resource selection or a resource reselection indication, and the eighth time is a time when the terminal performs channel sensing according to the indication.

The ninth time is determined based on the target time and the third delay, and the third delay is determined based on the first delay.

The third number is greater than or equal to the minimum number of slots required by the terminal for sensing, and is less than or equal to the fourth number, and the fourth number is determined based on the third delay and the second delay.

In some embodiments, the determination unit 401 is further configured to determine the first time based on the second delay and the eleventh time and determine the second time based on the first slot in the third number of candidate slots, the second value, and the third value.

The eleventh time is determined based on the first slot in the third number of candidate slots, the first set value, and the target time.

A time corresponding to the second value is a maximum time allowed for the terminal to prepare the physical SL channel, and a time corresponding to the third value is a time for the terminal to process a channel sensing result.

In some embodiments, the determination unit 401 is further configured to determine the thirteenth time and the fourteenth time, and determine the first time and the second time based on the fourteenth time, or determine the first time and the second time based on the thirteenth time and the fourteenth time. The number of slots within a range from the thirteenth time to the fourteenth time is greater than or equal to the fifth number.

In some embodiments, the fifth number is determined based on at least one of: network configuration information, pre-configuration information, predefined information, the first set value, a priority of to-be-transmitted data, or the first delay. The first delay is a remaining delay corresponding to a to-be-transmitted data packet of the terminal.

In some embodiments, the fifth number is determined based on the first delay, the minimum number of slots required for the terminal for sensing, the second value, and the third value.

The first delay is the remaining delay corresponding to the to-be-transmitted data packet of the terminal.

A time corresponding to the second value is a maximum time allowed for the terminal to prepare a physical SL channel, and a time corresponding to the third value is a time for the terminal to process a channel sensing result.

In some embodiments, the determination unit 401 is further configured to in a case that the third number of candidate slots can be determined within a range from the fifteenth time to the ninth time, determine the thirteenth time and the fourteenth time as the first time and the second time, respectively.

The fifteenth time is determined based on the target time, the fourteenth time, the third value, and the first value, a time corresponding to the third value is a time for the terminal to process a channel sensing result, and a time corresponding to the first value is a time required for the terminal to prepare a physical SL channel.

The ninth time is determined based on the target time and the third delay, the third delay is determined based on the first delay, and the first delay is the remaining delay corresponding to the to-be-transmitted data packet of the terminal.

The third number of candidate slots is greater than or equal to a minimum number of slots required by the terminal for sensing, and is less than or equal to the fourth number, and the fourth number is determined based on the third delay and a second delay.

In some embodiments, the determination unit 401 is further configured to in a case that the third delay is the same as the first delay, and the number of slots within a range from the fifteenth time to the ninth time is less than the minimum number of slots required by the terminal for sensing, determine that both the first time and the second time are 0.

The fifteenth time is determined based on the target time, the fourteenth time, the third value, and the first value, a time corresponding to the third value is a time for the terminal to process a channel sensing result, and a time corresponding to the first value is a time required for the terminal to prepare a physical SL channel.

The ninth time is determined based on the target time and the third delay, the third delay is determined based on the first delay, and the first delay is the remaining delay corresponding to the to-be-transmitted data packet of the terminal.

In some embodiments, the determination unit 401 is further configured to determine the third number of candidate slots within a range from the sixteenth time to the ninth time and determine the first time and the second time based on the third number of candidate slots.

The sixteenth time is determined based on the ninth time and the third number.

The third number is greater than or equal to the minimum number of slots required by the terminal for sensing, and is less than or equal to the fourth number, and the fourth number is determined based on the third delay and the second delay.

The second delay is a delay between the seventh time and the eighth time, the seventh time is a time when the terminal has obtained a resource selection or a resource reselection indication, and the eighth time is a time when the terminal performs channel sensing according to the indication.

The ninth time is determined based on the target time and the third delay, the third delay is determined based on the first delay, and the first delay is the remaining delay corresponding to the to-be-transmitted data packet of the terminal.

**In** some embodiments, the determination unit 401 is further configured to determine the first time based on the second delay and the seventeenth time and determine the second time based on the first slot in the third number of candidate slots, the second value, and the third value.

The seventeenth time is determined based on the first slot in the third number of candidate slots, the first set value, and the target time.

A time corresponding to the second value is the maximum time allowed for the terminal to prepare a physical SL channel, and a time corresponding to the third value is a time for the terminal to process a channel sensing result.

In some embodiments, the second value is determined based on a subcarrier spacing.

In some embodiments, second values are 3, 5, 9 and 17, respectively, in a case that parameters corresponding to subcarrier spacings are 0, 1, 2 and 3, respectively.

In some embodiments, the third value is determined based on a subcarrier spacing.

In some embodiments, third values are 1, 1, 2 and 4, respectively in a case that parameters corresponding to subcarrier spacings are 0, 1, 2 and 3, respectively.

In some embodiments, the determination unit 401 is further configure to determine the time range in a case that at least one of following is satisfied:
a resource pool in which the terminal currently operates allowing a random resource selection; or
the resource pool in which the terminal currently operates being not allowed to reserve a resource for a new transmission of a Transport Block (TB).

In the invention, the third delay is equal to the first delay, or the third delay is equal to a result of the first delay minus a target value.

The target value is determined by at least one of: network configuration information; pre-configuration information or predefined information.

In some embodiments, the exclusion unit 402 is further configured to in a case that the sensing result indicates that Sidelink Control Information (SCI) has been detected within the time range and a resource reserved by the SCI is within the candidate slot, perform the resource exclusion on the resource in the candidate slot.

In some embodiments, the exclusion unit 402 is further configured to in a case that the sensing result indicates that the SCI has been detected within the time range, the resource reserved by the SCI is within the candidate slot, and a Reference Signal Received Power (RSRP) of a Physical Sidelink Control Channel (PSCCH) corresponding to the SCI or a RSRP of a Physical Sidelink Shared Channel (PSSCH) scheduled by the PSCCH is greater than a power threshold, perform the resource exclusion on the resource in the candidate slot.

In some embodiments the exclusion unit 402 is further configured to perform the resource exclusion on the resource reserved by the SCI in the resource in the candidate slot.

In some embodiments, the apparatus 400 for determining a resource further includes a selection unit 403. The selection unit 403 is configured to obtain a target candidate resource and select a resource for transmitting SL information from the target candidate resource. The target candidate resource is determined after performing the resource exclusion on the resource in the candidate slot.

The description of the above apparatus embodiment is similar to the description of the above method embodiment and has the same beneficial effect as the method embodiment. Technical details not disclosed in the apparatus embodiments of the present disclosure are understood with reference to the description of the method embodiments of the present disclosure.

It should be noted that, in the embodiments of the present disclosure, if the methods for determining the resource are implemented in the form of a software function module and sold or used as a standalone product, they may also be stored in a computer-readable storage medium. Based on this understanding, the part of the technical solutions of the embodiments of the present disclosure which essentially or partially contributes to the related technology may be embodied in the form of a software product, the computer software product is stored in a storage medium containing instructions for causing a terminal to perform all or part of the methods described in the various embodiments of the present disclosure.

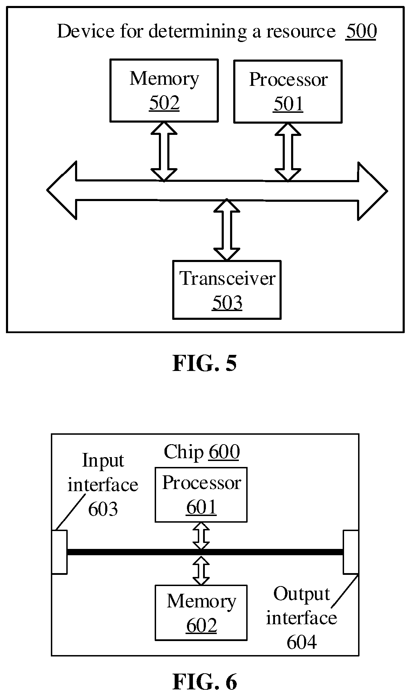

FIG. 5 is a hardware entity diagram of a device for determining a resource provided by the embodiments of the present disclosure. As illustrated in FIG. 5, the hardware entities of the device 500 for determining a resource includes a processor 501 and a memory 502. The memory 502 is configured to store computer programs executable by the processor 501, and the processor 501 is configured to implement the method of any of embodiments when executing the programs.

The memory 502 stores computer programs executable by the processor. The memory 502 is configured to store instructions and applications executable by processor 501, and may also cache to-be-processed data (for example, image data, audio data, voice communication data, and video communication data) or already processed by the processor 501 and various modules in the device 500 for determining a resource, which may be implemented by a FLASH or a Random Access Memory (RAM).

The processor 501 implements the method for determining a resource of any of the above embodiments when executing the programs. The processor 501 generally controls the overall operation of the device 500 for determining a resource.

The memory 502 may be a separate device independent of the processor 501 or may be integrated in the processor 501.

In some embodiments, the device 500 for determining a resource may further include a transceiver 503. The processor 501 may control the transceiver 503 to communicate with other devices. In particular, the transceiver 503 may transmit or receive information or data to or from other devices.

The transceiver 503 may include a transmitter and a receiver. The transceiver 503 may further include antennas, and the number of antennas may be one or more.

In some embodiments, the device 500 for determining a resource may be specifically a network device in the embodiments of the present disclosure, and the device 500 for determining a resource may implement corresponding processes implemented by the network device in various methods of the embodiments of the present disclosure, which will not be repeated here for the sake of brevity.

In some embodiments, the device 500 for determining a resource may be specifically a terminal in the embodiments of the present disclosure, and the device 500 for determining a resource may implement corresponding processes implemented by the terminal in various methods of the embodiments of the present disclosure, which will not be repeated here for the sake of brevity.

The embodiments of the present disclosure provide a computer storage medium. The computer storage medium stores one or more programs that, when being executed by one or more processors, implement the method for determining a resource of any of the embodiments.

FIG. 6 is a schematic structural diagram of a chip provided by the embodiments of the present disclosure. The chip 600 illustrated in FIG. 6 includes a processor 601. The processor 601 may call and run computer programs in the memory to implement the methods in the embodiments of the present disclosure.

In some embodiments, as illustrated in FIG. 6, the chip 600 may further include a memory 602. The processor 601 may call and run computer programs in the memory 602 to implement the methods in the embodiments of the present disclosure.

The memory 602 may be a separate device independent of the processor 601 or may be integrated in the processor 601.

In some embodiments, the chip 600 may further include an input interface 603. The processor 601 may control the input interface 603 to communicate with other devices or chips. In particular, the input interface 603 may obtain information or data transmitted by other devices or chips.

In some embodiments, the chip 600 may further include an output interface 604. The processor 601 may control the output interface 840 to communicate with other devices or chips. In particular, the output interface 840 may output information or data to other devices or chips.

In some embodiments, the chip may be applied to the network device in the embodiments of the present disclosure, and the chip may implement corresponding processes implemented by the network device in various methods of the embodiments of the present disclosure, which will not be repeated here for the sake of brevity.

In some embodiments, the chip may be applied to the terminal in the embodiments of the present disclosure, and the chip may implement corresponding processes implemented by the terminal in various methods of the embodiments of the present disclosure, which will not be repeated here for the sake of brevity.

It should be understood that the chip referred to in embodiments of the present disclosure may also be called system level chip, system chip, chip system or system-on-chip or the like.

The embodiments of the present disclosure provide a computer program product. The computer program product includes computer storage medium storing computer programs. The computer programs include instructions executable by at least one processor, and the method of any of the above embodiments is implemented when the instructions are executed by the at least one processor.

The embodiments of the present disclosure further provide a computer program. The computer program causes a computer to perform the method of any of the above embodiments.

In some embodiments, the computer program product and/or computer program may be applied to a terminal in the embodiments of the present disclosure. When the computer program is run on the computer, the computer executes the corresponding processes implemented by the terminal in the various methods of the embodiments of the present disclosure, which is not repeated here for the sake of brevity.

The above description of the computer storage medium, the device, the chip, the computer program product, and computer program embodiments is similar to the description of the above method embodiments and has similar beneficial effects as the method embodiments. Technical details not disclosed in the embodiments of the storage medium and device of the present disclosure are understood with reference to the description of the method embodiments of the present disclosure.

Preferred embodiments of the present disclosure have been described in detail with reference to the accompanying drawings, but the present disclosure is not limited to the specific details of the above embodiments. Within the scope of the technical conception of the present disclosure, various simple modifications may be made to the technical solutions of the present disclosure, and these simple modifications all belong to the scope of protection of the present disclosure. For example, each of the specific technical features described in the above specific embodiments may be combined in any suitable manner without contradiction, and various possible combinations are not further described in the present disclosure in order to avoid unnecessary repetition. For another example, any combination may be made between the various embodiments of the present disclosure so long as it does not depart from the idea of the present disclosure and is likewise to be regarded as the disclosure of the present disclosure. For another example, on the premise of no conflict, each embodiment described in the present disclosure and/or the technical features in each embodiment may be arbitrarily combined with the prior art, and the technical solutions obtained after combination should also fall within the scope of protection of the present disclosure.

It should also be understood that in the various method embodiments of the present disclosure, the size of the sequence number of the above-mentioned processes does not mean the order of execution, and the execution order of the processes should be determined by their functions and inherent logic, and should not be defined in any way by the implementation process of the embodiments of the present disclosure. Further, in embodiments of the present disclosure, the terms "downlink", "uplink" and "SL " are used to denote transmission directions of a signal or data. The "downlink" is used to denote the first direction of transmission of the signal or data from a station to an UE of a cell. The "uplink" is used to denote the second direction of transmission of the signal or data from an UE of a cell to a station. The "SL" is used to denote the third direction of transmission of the signal or data from an UE 1 to an UE 2. For example, the "downlink signal" means that the transmission direction of the signal is the first direction. In addition, in embodiments of the present disclosure, the term "and/or" is merely used for describing an association relationship of associated objects, which indicates that three relationships may exist. Specifically, A and/or B may represent three cases: A exists alone, A and B exist at the same time, and B exists alone. In addition, the character "/" in the present disclosure generally indicates that there is a "or" relationship between the associated objects.

It should be understood that the processor in the embodiments of the present disclosure may be an integrated circuit chip having signal processing capability. In implementation, the various operations of the above method embodiments may be accomplished by integrated logic circuitry of hardware in the processor or instructions in the form of software. The processor may include an integration of any one or more of the following: an Application Specific Integrated Circuit (ASIC), a Digital Signal Processor (DSP), a Digital Signal Processing Device (DSPD), a Programmable Logic Device (PLD), a Field Programmable Gate Array (FPGA), a Central Processing Unit (CPU), a Graphics Processing Unit (GPU), and an embedded neural-network processor units (NPU), a controller, a microcontroller, or a microprocessor. It is to be understood that the electronic device for implementing the processor functions described above may be other and the embodiments of the present disclosure are not specifically limited. The methods, operations and logic block diagrams disclosed in embodiments of the present disclosure may be implemented or performed. The processor may be a microprocessor or the processor may be any conventional processor or the like. The methods disclosed in combination with the embodiments of the present disclosure may be directly embodied as the completion of the execution of the hardware decoding processor or the completion of the combined execution of the hardware and software modules in the decoding processor. The software modules may be located in a RAM, a flash memory, a Read-Only Memory (ROM), a Programmable ROM (PROM) or an Electrically Erasable PROM (EPROM), a register and other storage medium mature in the art. The storage medium is located in the memory, and the processor reads the information in the memory and completes the methods in combination with its hardware.

It is understood that the memory in embodiments of the present disclosure may be volatile memory or non-volatile memory or may include both volatile and non-volatile memory. The non-volatile memory may be a ROM, a PROM, an EPROM, an Electrically Erasable EPROM (EEPROM), or a flash memory. The volatile memory may be a RAM which serves as an external cache. By way of illustration, but not limitation, many forms of RAM are available, such as a Static RAM (SRAM), a Dynamic RAM (DRAM), a synchronous DRAM (SDRAM), a Double Data Rate SDRAM (DDR SDRAM), an Enhanced SDRAM (ESDRAM), an synchronous DRAM (SLDRAM), and a Direct Rambus RAM (DR RAM). It should be noted that the memory in the systems and methods described the present disclosure is intended to include but not limited to these and any other suitable types of memory.

It should be understood that the memory described above is exemplary, but not limiting, and, for example, the memory in embodiments of the present disclosure may also be a SRAM, a DRAM, a SDRAM, a DDR SDRAM, an ESDRAM, a SLDRAM, a DR RAM, etc. That is, the memory in embodiments of the present disclosure is intended to include but not limited to these and any other suitable types of memory.

Those of ordinary skill in the art will appreciate that the various example units and algorithm steps described in combination with the embodiments disclosed in the present disclosure may be implemented in electronic hardware or a combination of computer software and electronic hardware. Whether these functions are performed in hardware or software depends on the specific application and design constraints of the technical solutions. Skilled artisans may use different methods for each particular application to implement the described functionality, but such implementation should not be considered outside the scope of the present disclosure.

Those skilled in the art will clearly appreciate that, for convenience and conciseness of description, the specific operating processes of the above-described system, apparatus and units may refer to the corresponding processes in the aforementioned method embodiments and will not be repeated in the present disclosure.

In several embodiments provided in the present disclosure, it should be understood that the disclosed system, apparatus and methods may be implemented in other ways. For example, the above-described embodiment of the apparatus is only schematic, for example, the division of the units is only a logical function division, and in practice, there may be another division mode, for example, multiple units or components may be combined or integrated into another system, or some features may be ignored or not performed. On the other hand, the coupling or direct coupling or communication connection between each other illustrated or discussed may be indirect coupling or communication connection through some interface, apparatus or unit, and may be electrical, mechanical or other form.

The units illustrated as separate components may or may not be physically separated, and the components displayed as units may or may not be physical units. That is, they may be located in one place, or may be distributed over a plurality of network units. Part or all of the units can be selected according to the actual needs to achieve the purpose of the embodiments.

In addition, various functional units in the various embodiments of the present disclosure may be integrated in one processing unit, each unit may exist physically alone, or two or more units may be integrated in one unit.

The functions may be stored in a computer readable storage medium if implemented in the form of software functional units and sold or used as standalone products. Based on this understanding, the part of the technical solutions of the embodiments of the present disclosure which essentially or partially contributes to the related technology may be embodied in the form of a software product, the computer software product is stored in a storage medium containing instructions for causing a computer (which may be a personal computer, a server, a network device, etc.) to perform all or part of the methods described in the various embodiments of the present disclosure. The aforementioned storage medium includes a U disk, a removable hard disk, a ROM, a RAM, a magnetic disk or an optical disk and other medium capable of storing programs.

## Claims

1. A method for determining a resource, the method comprising:
determining (S301), by a terminal, a time range for contiguous partial sensing; and
performing (S301), by the terminal based on a sensing result within the time range, resource exclusion on at least one resource in a third number of candidate slots where a reserved resource corresponding to sensed sidelink information within the time range is located;
wherein the determining (S301), by the terminal, the time range for the contiguous partial sensing comprises:
determining, by the terminal, the time range based on a target time, a first time and a second time, wherein the target time is a target slot when the terminal triggers the contiguous partial sensing, the first time and the second time each indicate a number of slots;
wherein determining, by the terminal, the time range based on the target time, the first time and the second time comprises:
determining, by the terminal, a range from a third time to a fourth time as the time range, wherein the third time is a slot n+TA1, the fourth time is a slot n+TA2, n is a serial number of the target slot, TA1 is the first time, and TA2 is the second time;
wherein the method further comprises:
determining, by the terminal, the third number of candidate slots within a range from a fifth time to a ninth time; and
determining, by the terminal, the first time and the second time based on the third number of candidate slots,
**characterized in that** the fifth time is a sum of the target time and a second delay, and the fifth time is a starting time of a resource selection window,
the third number of candidate slots is greater than or equal to a minimum number of slots required by the terminal for sensing, and is less than or equal to a fourth number, and the fourth number is equal to a result of adding one after subtracting the second delay from a third delay,
a value of the second delay comprises 0 or 1; and
the ninth time is a sum of the target time and the third delay, the third delay is less than or equal to a first delay, the first delay is a remaining delay corresponding to a to-be-transmitted data packet of the terminal, and the ninth time is an ending time of the resource selection window,
wherein the third delay is equal to the first delay, or the third delay is equal to a result of the first delay minus a target value, and
the target value is determined by at least one of: network configuration information; pre-configuration information or predefined information.

2. The method of claim 1, wherein determining (S301), by the terminal, the time range for the contiguous partial sensing comprises:
prior to determining, by the terminal, the time range based on the target time, the first time, and the second time a physical layer of the terminal has received a resource selection indication or a resource reselection indication transmitted by a Media Access Control, MAC, layer of the terminal at the target time and the terminal operates in a mode of resource selection based on partial sensing.

3. The method of claim 1, wherein determining, by the terminal, the first time based on the third number of candidate slots comprises:
determining, by the terminal, the first time based on the second delay and a seventeenth time;
wherein the seventeenth time is determined based on a first slot in the third number of candidate slots, a first set value, and the target time.

4. The method of claim 1, wherein determining, by the terminal, the second time based on the third number of candidate slots comprises:
determining, by the terminal, the second time based on a first slot in the third number of candidate slots, a second value, and a third value;
wherein a time corresponding to the second value is a maximum time allowed for the terminal to prepare a physical SL channel, and a time corresponding to the third value is a time for the terminal to process a channel sensing result.

5. The method of any one of claims 1 to 4, wherein performing (S302), by the terminal based on the sensing result within the time range, resource exclusion on the at least one resource in the candidate slot corresponding to the time range comprises:
in a case that the sensing result indicates that Sidelink Control Information, SCI, has been detected within the time range and a resource reserved by the SCI is within the candidate slot, performing the resource exclusion on the at least one resource in the candidate slot.

6. The method of claim 5, wherein in the case that the sensing result indicates that the Sidelink Control Information, SCI, has been detected within the time range and the resource reserved by the SCI is within the candidate slot, performing the resource exclusion on the at least one resource in the candidate slot comprises:
in a case that the sensing result indicates that the SCI has been detected within the time range, the resource reserved by the SCI is within the candidate slot, and a Reference Signal Received Power, RSRP, of a Physical Sidelink Control Channel, PSCCH, corresponding to the SCI or a RSRP of a Physical Sidelink Shared Channel, PSSCH, scheduled by the PSCCH is greater than a power threshold, performing the resource exclusion on the at least one resource in the candidate slot.

7. The method of claim 5 or 6, wherein performing the resource exclusion on the at least one resource in the candidate slot comprises:
performing the resource exclusion on the resource, which is reserved by the SCI, in the at least one resource within the candidate slot.

8. The method of any one of claims 1 to 7, further comprising:
obtaining a target candidate resource, wherein the target candidate resource is determined based on performing the resource exclusion on the at least one resource in the candidate slot; and
selecting a resource for transmitting SL information from the target candidate resource.

9. The method of claim 3 or 4, further comprising:
when a physical layer of the terminal has received a resource selection or a resource reselection indication transmitted by the MAC layer of the terminal in a slot n, and the terminal currently operates in a mode of resource selection based on partial sensing, determining, by the terminal, Y candidate slots within a range [n+T0, n+D], wherein T0 is the second delay, D is the third delay, and Ymin ≤ Y ≤ D-T0+1, wherein Y candidate slots are the third number of candidate slots, and the slot n is the target time.

10. A terminal for determining a resource, comprising a memory and a processor,
wherein the memory is configured to store computer programs executable by the processor, and
the processor is configured to implement the method of any one of claims 1 to 9 when executing the programs.

11. A non-transitory computer storage medium, having stored thereon one or more programs that, when being executed by one or more processors, implement the method of any one of claims 1 to 9.

12. A chip, comprising a processor, wherein the processor is configured to call and run computer programs in a memory, to cause a device on which the chip is mounted to perform the method of any one of claims 1 to 9.

## Patentansprüche

1. Verfahren zum Bestimmen einer Ressource, wobei das Verfahren Folgendes umfasst:
Bestimmen (S301) eines Zeitbereichs für zusammenhängende Teilerfassung durch ein Endgerät; und
Durchführen (S301) durch das Endgerät basierend auf einem Erfassungsergebnis innerhalb des Zeitbereichs von Ressourcenausschluss an mindestens einer Ressource in einer dritten Anzahl von Kandidaten-Slots, in denen eine reservierte Ressource gelegen ist, die den erfassten Sidelink-Informationen innerhalb des Zeitbereichs entspricht;
wobei das Bestimmen (S301) des Zeitbereichs für die zusammenhängende Teilerfassung durch das Endgerät Folgendes umfasst:
Bestimmen durch das Endgerät des Zeitbereichs basierend auf einer Zielzeit, einer ersten Zeit und einer zweiten Zeit, wobei die Zielzeit ein Ziel-Slot ist, wenn das Endgerät die zusammenhängende Teilerfassung auslöst, wobei die erste Zeit und die zweite Zeit jeweils eine Anzahl von Slots angeben;
wobei Bestimmen durch das Endgerät des Zeitbereichs basierend auf der Zielzeit, der ersten Zeit und der zweiten Zeit Folgendes umfasst:
Bestimmen durch das Endgerät eines Bereichs von einer dritten Zeit bis zu einer vierten Zeit als Zeitbereich, wobei die dritte Zeit ein Slot n+TA1 ist, die vierte Zeit ein Slot n+TA2 ist, n eine Seriennummer des Ziel-Slots ist, TA1 die erste Zeit ist und TA2 die zweite Zeit ist;
wobei das Verfahren weiter Folgendes umfasst:
Bestimmen durch das Endgerät der dritten Anzahl von Kandidaten-Slots innerhalb eines Bereichs von einer fünften Zeit zu einer neunten Zeit; und
Bestimmen durch das Endgerät der ersten Zeit und der zweiten Zeit basierend auf der dritten Anzahl von Kandidaten-Slots,
**dadurch gekennzeichnet, dass** die fünfte Zeit eine Summe der Zielzeit und einer zweiten Verzögerung ist und die fünfte Zeit eine Startzeit eines Ressourcenauswahlfensters ist,
die dritte Anzahl von Kandidaten-Slots größer oder gleich einer Mindestanzahl von Slots ist, die vom Endgerät zum Erfassen benötigt wird, und kleiner oder gleich einer vierten Anzahl ist, und wobei die vierte Anzahl gleich einem Ergebnis von Addieren von eins nach Subtrahieren der zweiten Verzögerung von einer dritten Verzögerung ist,
wobei ein Wert der zweiten Verzögerung 0 oder 1 umfasst; und
die neunte Zeit eine Summe der Zielzeit und der dritten Verzögerung ist, wobei die dritte Verzögerung kleiner oder gleich einer ersten Verzögerung ist, wobei die erste Verzögerung eine verbleibende Verzögerung ist, die einem zu übertragenden Datenpaket des Endgeräts entspricht, und die neunte Zeit eine Endzeit des Ressourcenauswahlfensters ist,
wobei die dritte Verzögerung gleich der ersten Verzögerung ist oder die dritte Verzögerung gleich einem Ergebnis der ersten Verzögerung minus eines Zielwerts ist, und
der Zielwert durch mindestens eines bestimmt wird von: Netzwerkkonfigurationsinformationen; Vorkonfigurationsinformationen oder vordefinierten Informationen.

2. Verfahren nach Anspruch 1, wobei Bestimmen (S301), durch das Endgerät, des Zeitbereichs für die zusammenhängende Teilerfassung Folgendes umfasst:
vor Bestimmen des Zeitbereichs durch das Endgerät basierend auf der ersten Zeit und der zweiten Zeit hat eine physikalische Schicht des Endgeräts eine Ressourcenwiederauswahlangabe oder eine von einer Media Access Control-, MAC-, Schicht übertragene Ressourcenwiederauswahlangabe des Endgeräts zur Zielzeit empfangen, und das Endgerät arbeitet im Modus der Ressourcenauswahl basierend auf Teilerfassung.

3. Verfahren nach Anspruch 1, wobei Bestimmen der ersten Zeit durch das Endgerät basierend auf der dritten Anzahl von Kandidaten-Slots Folgendes umfasst:
Bestimmen durch das Endgerät der ersten Zeit basierend auf der zweiten Verzögerung und einer siebzehnten Zeit;
wobei die siebzehnte Zeit basierend auf einem ersten Slot in der dritten Anzahl von Kandidaten-Slots, einem ersten eingestellten Wert und der Zielzeit bestimmt wird.

4. Verfahren nach Anspruch 1, wobei Bestimmen der zweiten Zeit durch das Endgerät basierend auf der dritten Anzahl von Kandidaten-Slots Folgendes umfasst:
Bestimmen durch das Endgerät der zweiten Zeit basierend auf einem ersten Zeit-Slot in der dritten Anzahl von Kandidaten-Slots, einem zweiten Wert und einem dritten Wert;
wobei eine dem zweiten Wert entsprechende Zeit eine maximal zulässige Zeit dafür ist, dass das Endgerät einen physikalischen SL-Kanal vorbereitet, und eine Zeit, die dem dritten Wert entspricht, eine Zeit dafür ist, dass das Endgerät ein Kanalerfassungsergebnis verarbeitet.

5. Verfahren nach einem der Ansprüche 1 bis 4, wobei Durchführen (S302) von Ressourcenausschluss an der mindestens einen Ressource im Kandidaten-Slot, der dem Zeitbereich entspricht, durch das Endgerät basierend auf dem Erfassungsergebnis innerhalb des Zeitbereichs Folgendes umfasst:
in einem Fall, dass das Erfassungsergebnis angibt, dass innerhalb des Zeitbereichs Sidelink-Steuerinformationen, SCI, erkannt wurden und sich eine von den SCI reservierte Ressource im Kandidaten-Slot befindet, Durchführen des Ressourcenausschlusses an der mindestens einen Ressource im Kandidaten-Slot.

6. Verfahren nach Anspruch 5, wobei, in dem Fall, dass das Erfassungsergebnis angibt, dass die Sidelink-Steuerinnformationen, SCI, innerhalb des Zeitbereichs erkannt wurden und sich die durch die SCI reservierte Ressource innerhalb des Kandidaten-Slots befindet, Durchführen des Ressourcenausschlusses an der mindestens einen Ressource im Kandidaten-Slot Folgendes umfasst:
in einem Fall, dass das Erfassungsergebnis angibt, dass die SCI innerhalb des Zeitbereichs erkannt wurden, sich die durch die SCI reservierte Ressource im Kandidaten-Slot befindet und eine Referenzsignalempfangsleistung, RSRP, eines physikalischen Seitenlink-Steuerkanals, PSCCH, der den SCI entspricht, oder eine RSRP eines physikalischen gemeinsam genutzten Sidelink-Kanals, PSSCH, der vom PSCCH geplant ist, größer als ein Leistungsschwellenwert ist, Durchführen des Ressourcenausschlusses an der mindestens einen Ressource im Kandidaten-Slot.

7. Verfahren nach Anspruch 5 oder 6, wobei Durchführen des Ressourcenausschlusses an der mindestens einen Ressource im Kandidaten-Slot Folgendes umfasst:
Durchführen des Ressourcenausschlusses an der Ressource, die von den SCI reserviert ist, in der mindestens einen Ressource innerhalb des Kandidaten-Slots.

8. Verfahren nach einem der Ansprüche 1 bis 7, weiter umfassend:
Erhalten einer Zielkandidatenressource, wobei die Zielkandidatenressource basierend auf Durchführen des Ressourcenausschlusses an der mindestens einen Ressource im Kandidaten-Slot bestimmt wird; und
Auswählen einer Ressource zur Übertragung von SL-Informationen von der Zielkandidatenressource.

9. Verfahren nach Anspruch 3 oder 4, weiter umfassend:
wenn eine physikalische Schicht des Endgeräts eine von der MAC-Schicht des Endgeräts in einem Zeit-Slot n übertragene Ressourcenauswahl oder Ressourcenneuauswahlangabe empfangen hat und das Endgerät aktuell in einem Modus von Ressourcenauswahl basierend auf Teilerfassung arbeitet, Bestimmen durch das Endgerät von Y Kandidaten-Slots innerhalb eines Bereichs [n+T0, n+D], wobei T0 die zweite Verzögerung ist, D die dritte Verzögerung ist und Ymin ≤ Y ≤ D-T0+1, wobei Y Kandidaten-Slots die dritte Anzahl von Kandidaten-Slots ist und der Slot n die Zielzeit ist.

10. Endgerät zum Bestimmen einer Ressource, das einen Speicher und einen Prozessor umfasst,
wobei der Speicher so konfiguriert ist, dass er Computerprogramme speichert, die von dem Prozessor ausführbar sind, und
der Prozessor so konfiguriert ist, dass er, wenn die Programme ausgeführt werden, das Verfahren nach einem der Ansprüche 1 bis 9 implementiert.

11. Nichtflüchtiges Computerspeichermedium, das darauf gespeichert ein oder mehrere Programme aufweist, die, wenn sie von einem oder mehreren Prozessoren ausgeführt werden, das Verfahren eines der Ansprüche 1 bis 9 implementieren.

12. Chip, der einen Prozessor umfasst, wobei der Prozessor so konfiguriert ist, dass er Computerprogramme in einem Speicher aufruft und ausführt, um zu bewirken, dass eine Vorrichtung, auf der der Chip montiert ist, das Verfahren nach einem der Ansprüche 1 bis 9 durchführt.

## Revendications

1. Procédé de détermination d'une ressource, le procédé comprenant :
la détermination (S301), par un terminal, d'une plage de temps propice à une détection partielle contiguë ; et
l'exécution (S301), par le terminal et sur la base d'un résultat de détection dans la plage de temps, d'une exclusion de ressources sur au moins une ressource dans un troisième nombre de créneaux candidats dans lesquels se trouve une ressource réservée correspondant à des informations de liaison latérale détectées dans la plage de temps ;
dans lequel la détermination (S301), par le terminal, de la plage de temps propice à la détection partielle contiguë comprend :
la détermination, par le terminal, de la plage de temps sur la base d'un temps cible, d'un premier temps et d'un deuxième temps, dans lequel le temps cible est un créneau cible lorsque le terminal déclenche la détection partielle contiguë, le premier temps et le deuxième temps indiquent chacun un nombre de créneaux ;
dans lequel la détermination, par le terminal, de la plage de temps sur la base du temps cible, du premier temps et du deuxième temps comprend :
la détermination, par le terminal, d'une plage allant d'un troisième temps à un quatrième temps au titre de la plage de temps, dans lequel le troisième temps est un créneau n+TA1, le quatrième temps est un créneau n+TA2, n est un numéro de série du créneau cible, TA1 est le premier temps, et TA2 est le deuxième temps ;
dans lequel le procédé comprend en outre :
la détermination, par le terminal, du troisième nombre de créneaux candidats dans une plage allant d'un cinquième temps à un neuvième temps ; et
la détermination, par le terminal, du premier temps et du deuxième temps sur la base du troisième nombre de créneaux candidats,
**caractérisé en ce que** le cinquième temps est une somme du temps cible et d'un deuxième retard, et **en ce que** le cinquième temps est un temps de début d'une fenêtre de sélection de ressource,
le troisième nombre de créneaux candidats est supérieur ou égal à un nombre minimal de créneaux requis par le terminal pour une détection, et est inférieur ou égal à un quatrième nombre, et le quatrième nombre est égal à un résultat d'une addition de un après avoir soustrait le deuxième retard du troisième retard,
une valeur du deuxième retard comprend 0 ou 1 ; et
le neuvième temps est une somme du temps cible et du troisième retard, le troisième retard est inférieur ou égal à un premier retard, le premier retard est un retard restant correspondant à un paquet de données à transmettre du terminal, et le neuvième temps est un temps de fin de la fenêtre de sélection de ressource,
dans lequel le troisième retard est égal au premier retard, ou le troisième retard est égal à un résultat du premier retard moins une valeur cible, et
la valeur cible est déterminée par au moins l'une des options parmi : des informations de configuration de réseau ; des informations de préconfiguration ou des informations prédéfinies.

2. Procédé selon la revendication 1, dans lequel la détermination (S301), par le terminal, de la plage de temps propice à la détection partielle contiguë comprend :
avant la détermination, par le terminal, de la plage de temps sur la base du temps cible, du premier temps, et du deuxième temps, la détermination qu'une couche physique du terminal a reçu une indication de sélection de ressource ou une indication de resélection de ressource transmise par une couche de contrôle d'accès au support, MAC, du terminal au temps cible et que le terminal fonctionne en un mode de sélection de ressource sur la base d'une détection partielle.

3. Procédé selon la revendication 1, dans lequel la détermination, par le terminal, du premier temps sur la base du troisième nombre de créneaux candidats comprend :
la détermination, par le terminal, du premier temps sur la base du deuxième retard et d'un dix-septième temps ;
dans lequel le dix-septième temps est déterminé sur la base d'un premier créneau dans le troisième nombre de créneaux candidats, d'une première valeur définie, et du temps cible.

4. Procédé selon la revendication 1, dans lequel la détermination, par le terminal, du deuxième temps sur la base du troisième nombre de créneaux candidats comprend :
la détermination, par le terminal, du deuxième temps sur la base d'un premier créneau dans le troisième nombre de créneaux candidats, d'une deuxième valeur, et d'une troisième valeur ;
dans lequel un temps correspondant à la deuxième valeur est un temps maximal autorisé pour que le terminal prépare un canal physique SL, et un temps correspondant à la troisième valeur est un temps permettant au terminal de traiter un résultat de détection de canal.

5. Procédé selon l'une quelconque des revendications 1 à 4, dans lequel l'exécution (S302), par le terminal et sur la base du résultat de détection dans la plage de temps, d'une exclusion de ressources sur la au moins une ressource dans le créneau candidat correspondant à la plage de temps comprend :
lorsque le résultat de détection indique que des informations de commande de liaison latérale, SCI, ont été détectées dans la plage de temps et qu'une ressource réservée par les SCI se trouve dans le créneau candidat, l'exécution de l'exclusion de ressources sur la au moins une ressource dans le créneau candidat.

6. Procédé selon la revendication 5, dans lequel, lorsque le résultat de détection indique que les informations de commande de liaison latérale, SCI, ont été détectées dans la plage de temps et que la ressource réservée par les SCI se trouve dans le créneau candidat, l'exécution de l'exclusion de ressources sur la au moins une ressource dans le créneau candidat comprend :
lorsque le résultat de détection indique que les SCI ont été détectées dans la plage de temps, que la ressource réservée par les SCI se trouve dans le créneau candidat, et qu'une puissance de réception d'un signal de référence, RSRP, d'un canal physique de commande de liaison latérale, PSCCH, correspondant aux SCI ou à une RSRP d'un canal physique partagé de liaison latérale, PSSCH, planifiée par le PSCCH est supérieure à un seuil de puissance, l'exécution de l'exclusion de ressources sur la au moins une ressource dans le créneau candidat.

7. Procédé selon la revendication 5 ou 6, dans lequel l'exécution de l'exclusion de ressources sur la au moins une ressource dans le créneau candidat comprend :
l'exécution de l'exclusion de ressources sur la ressource, qui est réservée par les SCI, parmi la au moins une ressource dans le créneau candidat.

8. Procédé selon l'une quelconque des revendications 1 à 7, comprenant en outre :
l'obtention d'une ressource candidate cible, dans lequel la ressource candidate cible est déterminée sur la base de l'exécution de l'exclusion de ressources sur la au moins une ressource dans le créneau candidat ; et
la sélection d'une ressource pour une transmission d'informations SL à partir de la ressource candidate cible.

9. Procédé selon la revendication 3 ou 4, comprenant en outre :
lorsqu'une couche physique du terminal a reçu une indication de sélection de ressource ou une indication de resélection de ressource transmise par la couche MAC du terminal dans un créneau n, et que le terminal fonctionne actuellement en un mode de sélection de ressource sur la base d'une détection partielle, la détermination, par le terminal, des Y créneaux candidats dans une plage [n+T0, n+D], dans lequel T0 est le deuxième retard, D est le troisième retard, et Ymin ≤ Y ≤ D-T0+1, dans lequel Y créneaux candidats constituent le troisième nombre de créneaux candidats, et le créneau n est le temps cible.

10. Terminal destiné à la détermination d'une ressource, comprenant une mémoire et un processeur,
dans lequel la mémoire est configurée pour stocker des programmes informatiques exécutables par le processeur, et
le processeur est configuré pour mettre en œuvre le procédé selon l'une quelconque des revendications 1 à 9 lorsqu'il exécute les programmes.

11. Support de stockage informatique non transitoire, sur lequel sont stockés un ou plusieurs programmes qui, lorsqu'ils sont exécutés par un ou plusieurs processeurs, mettent en œuvre le procédé selon l'une quelconque des revendications 1 à 9.

12. Puce, comprenant un processeur, dans laquelle le processeur est configuré pour appeler et exécuter des programmes informatiques dans une mémoire, de façon à amener un dispositif sur lequel la puce est montée à exécuter le procédé selon l'une quelconque des revendications 1 à 9.
